# EUROPÄISCHE PATENTSCHRIFT

(11) **EP 4 011 099 B1**
(45) Veröffentlichungstag und Bekanntmachung des Hinweises auf die Patenterteilung: **09.12.2026**
(21) Anmeldenummer: 20751113.0
(22) Anmeldetag: 31.07.2020
(51) Int. Cl.: H04S 7/00, H04S 1/00, H04R 1/32, H04R 25/00

(54) **SYSTEM UND VERFAHREN ZUR UNTERSTÜTZUNG VON SELEKTIVEM HÖREN**
SYSTEM AND METHOD TO ASSIST SELECTIVE HEARING
SYSTÈME ET PROCÉDÉ POUR FAVORISER UNE ÉCOUTE SELECTIVE

(30) Priorität: 06.08.2019 EP 19190381
(43) Veröffentlichungstag der Anmeldung: 15.06.2022
(73) Patentinhaber: Fraunhofer-Gesellschaft zur Förderung der angewandten Forschung e.V., 80686 München (DE); Technische Universität Ilmenau, 98693 Ilmenau (DE)
(72) Erfinder: SPORER, Thomas, 98693 Ilmenau (DE); FISCHER, Georg, 98693 Ilmenau (DE); LUKASHEVICH, Hanna, 98693 Ilmenau (DE); KLEIN, Florian, 98693 Ilmenau (DE); WERNER, Stephan, 98693 Ilmenau (DE); NEIDHARDT, Annika, 98693 Ilmenau (DE); SCHNEIDERWIND, Christian, 98693 Ilmenau (DE); SLOMA, Ulrike, 98693 Ilmenau (DE); STIRNAT, Claudia, 98693 Ilmenau (DE); CANO CERÓN, Estefanía, 98693 Ilmenau (DE); ABE ER, Jakob, 98693 Ilmenau (DE); SLADECZEK, Christoph, 98693 Ilmenau (DE); BRANDENBURG, Karlheinz, 98693 Ilmenau (DE)
(74) Vertreter: Schairer, Oliver Michael
(86) Internationale Anmeldenummer: PCT/EP2020/071700
(87) Internationale Veröffentlichungsnummer: WO 2021/023667

(56) Entgegenhaltungen:
- EP-A1- 1 708 543
- WO-A1-2015/103578
- WO-A1-2017/197156
- US-A1- 2006 045 294
- US-A1- 2017 359 467
- US-A1- 2018 109 900
- K. BRANDENBURGE. CANOF. KLEINT. KÖLLMERH. LUKASHEVICHA. NEIDHARDTU. SLOMAS. WERNER: "Plausible augmentation of auditory scenes using dynamic binaural synthesis for personalized auditory realities", PROC. OF AES INTERNATIONAL CONFERENCE ON AUDIO FOR VIRTUAL AND AUGMENTED REALITY, August 2018 (2018-08-01)
- SNYDER DAVID ET AL: "X-Vectors: Robust DNN Embeddings for Speaker Recognition", 2018 IEEE INTERNATIONAL CONFERENCE ON ACOUSTICS, SPEECH AND SIGNAL PROCESSING (ICASSP) IEEE, 15 April 2018 (2018-04-15), pages 5329 - 5333, XP033403941, [retrieved on 20180910], DOI: 10.1109/ICASSP.2018.8461375

## Beschreibung

Die vorliegenden Erfindungen beziehen sich auf Aspekte der räumlichen Aufnahme, Analyse, Wiedergabe und Empfindung, insbesondere auf die binaurale Analyse und Synthese.

Selektives Hören (engl.: Selective Hearing, SH) bezieht sich auf die Fähigkeit der Hörer, ihre Aufmerksamkeit auf eine bestimmte Schallquelle oder auf eine Mehrzahl von Schallquellen in ihrer auditiven Szene zu richten. Dies wiederum impliziert, dass der Fokus der Hörer für uninteressante Quellen vermindert wird.

So sind menschliche Hörer in der Lage, sich in lauten Umgebungen zu verständigen. Dabei werden in der Regel verschiedene Aspekte ausgenutzt: So gibt es beim Hören mit zwei Ohren richtungsabhängige Zeit- und Pegelunterschiede und eine richtungsabhängige unterschiedliche spektrale Färbung des Schalls. Dadurch ist es dem Gehör möglich die Richtung einer Schallquelle festzustellen und sich auf diese zu konzentrieren.

Des Weiteren sind bei natürlichen Schallquellen, wie insbesondere Sprache, sind die Signalanteile unterschiedlicher Frequenz zeitlich gekoppelt. Dadurch ist das Gehör bereits beim einohrigem Hören in der Lage verschiedene Klangquellen zu trennen. Beim binauralen Hören werden beide Aspekte zusammen eingesetzt. Ferner können laute, gut zu lokalisierende Störquellen können quasi aktiv ignoriert werden

Das Konzept des selektiven Hörens ist in der Literatur mit anderen Begriffen wie unterstütztem Hören (engl.: assisted listening) [1], virtuellen und verstärkten auditiven Umgebungen [2] verwandt. Unterstütztes Hören ist ein Oberbegriff, der virtuelle, verstärkte und SH-Anwendungen umfasst.

Gemäß dem Stand der Technik arbeiten klassische Hörgeräte monaural, d.h. die Signalverarbeitung für rechtes und linkes Ohr ist bezüglich Frequenzgang und Dynamikkompression komplett unabhängig. Dadurch gehen Zeit-, Pegel- und Frequenzunterschiede zwischen den Ohrsignalen verloren.

Moderne, sogenannte binaurale Hörgeräte koppeln die Korrekturfaktoren der beiden Hörgeräte. Oft haben sie mehrere Mikrofone, aber i.d.R. wird oft nur das Mikrofon mit dem "sprachähnlichsten" Signal ausgewählt, aber kein Beamforming gerechnet. In komplexen Hörsituationen werden gewünschte und unerwünschte Schallsignale in gleicher Weise verstärkt und damit eine Konzentration auf erwünschte Schallkomponenten nicht unterstützt.

Im Bereich der Freisprechanlagen, z.B. für Telefone, werden bereits heute mehrere Mikrofone verwendet und aus den einzelnen Mikrofonsignalen sogenannte Beams berechnet: Schall der aus der Richtung des Beams kommt wird verstärkt, Schall aus anderen Richtungen reduziert. Heutige Verfahren lernen das konstante Hintergrundgeräusch (z.B. Motor- und Windgeräusche im Auto), lernen laute, durch einen weiteren Beam gut lokalisierbare Störungen und subtrahieren diese vom Nutzsignal (Beispiel: Generalized Sidelobe Canceler). Teilweise werden in Telefoniesysteme Erkenner eingesetzt, die die statischen Eigenschaften von Sprache erkennen und alles, was nicht wie Sprache strukturiert ist, wird unterdrückt. Bei Freisprecheinrichtungen wird aber am Ende nur ein Monosignal übertragen, die räumliche Information, welche zur Erfassung der Situation und insbesondere zur Schaffung der Illusion als "wäre man da" durchaus interessant ist, insbesondere wenn mehrere Sprecher gemeinsam telefonieren, geht auf dem Übertragungsweg verloren. Durch die Unterdrückung von Nichtsprachsignalen gehen wichtige Informationen über die akustische Umgebung des Gesprächspartners verloren was die Kommunikation behindern kann.

WO 2015/103578 A1 beschreibt ein System zur Unterstützung von selektivem Hören und ein entsprechendes Verfahren.

Der Mensch kann von Natur aus "selektiv hören" und sich bewusst auf einzelne Klangquellen in seinem Umfeld fokussieren. Ein automatisches System zum selektiven Hören mittels künstlicher Intelligenz (KI) muss die dahinter liegenden Konzepte zuerst erlernen. Die automatische Zerlegung akustischer Szenen (Scene Decomposition) benötigt zuerst eine Erkennung und Klassifikation aller aktiven Klangquellen gefolgt von einer Trennung um sie als separate Audioobjekte weiter verarbeiten, verstärken oder abschwächen zu können.

Im Forschungsfeld Auditory Scene Analysis wird versucht, anhand eines aufgenommenen Audiosignals sowohl zeitlokalisierte Klangereignisse wie Schritte, Klatschen oder Schreie als auch globalere akustische Szenen wie Konzert, Restaurant oder Supermarkt zu detektieren und zu klassifizieren. Aktuelle Verfahren nutzen hierbei ausschließlich Verfahren aus dem Bereich Künstliche Intelligenz (KI) und Deep Learning. Hierbei erfolgt ein datengetriebenes Lernen von tiefen neuronalen Netzen (Deep Neural Networks), die auf Basis von großen Trainingsmengen lernen, charakteristische Muster im Audiosignal zu erkennen [70]. Vor allem inspiriert durch Fortschritte in den Forschungsbereichen Bildverarbeitung (Computer Vision) und Sprachverarbeitung (Natural Language Processing) werden hier i.d.R. Mischungen aus Faltungsnetzwerken (Convolutional Neural Networks) zur zweidimensionalen Mustererkennung in Spektrogramm-Darstellungen sowie rekurrierende Schichten (Recurrent Neural Networks) zur zeitlichen Modellierung von Klängen verwendet.

Für die Audioanalyse gibt es eine Reihe von spezifischen Herausforderungen, die es zu bewältigen gilt. Deep Learning Modelle sind aufgrund ihrer Komplexität sehr datenhungrig. Im Vergleich zu den Forschungsgebieten Bildverarbeitung und Sprachverarbeitung stehen aktuell für Audioverarbeitung nur verhältnismäßig kleine Datensätze zur Verfügung. Als größter Datensatz ist der AudioSet Datensatz von Google [83] mit ca. 2 Millionen Klangbeispielen und 632 verschiedenen Klangereignisklassen zu nennen, wobei die meisten in der Forschung verwendeten Datensätze wesentlich kleiner sind. Diese geringe Menge an Trainingsdaten kann z.B. mit Transfer-Lernen (Transfer Learning) adressiert werden, in dem ein auf einem großen Datensatz vortrainiertes Modell anschließend auf einen für den An-wendungsfall bestimmten kleineren Datensatz mit neuen Klassen feinabgestimmt wird (Fine-Tuning) [77]. Weiterhin werden Verfahren aus dem teilüberwachten Lernen (Semi-Supervised Learning) ein-gesetzt, um auch die im Allgemeinen in großer Menge verfügbaren nicht annotierten Audiodaten mit in das Training einzubeziehen.

Ein weiterer wesentlicher Unterschied zur Bildverarbeitung ist, dass es bei gleichzeitig hörbaren akustischen Ereignissen nicht zu einer Verdeckung von Klangobjekten (wie bei Bildern) sondern zu einer komplexen phasenabhängigen Überlagerung kommt. Aktuelle Algorithmen im Deep Learning nutzen sogenannte "Attention" Mechanismen, die den Modellen beispielsweise ermöglichen, sich bei der Klassifikation auf bestimmte Zeitsegmente oder Frequenzbereiche zu fokussieren [23]. Die Erkennung von Klangereignissen wird weiterhin durch die hohe Varianz bezüglich ihrer Dauer erschwert. Algo-rithmen sollen sowohl sehr kurze Ereignisse wie z.B. einen Pistolenschuss als auch lange Ereignisse wie einen vorbeifahrenden Zug robust erkennen.

Durch die starke Abhängigkeit der Modelle von den akustischen Bedingungen bei der Aufnahme der Trainingsdaten zeigen sie in neuen akustischen Umgebungen, welche sich z.B. im Raumhall oder der Mikrofonierung unterscheiden, oftmals ein unerwartetes Verhalten. Verschiedene Lösungsansätze wurden entwickelt um dieses Problem abzumildern. Durch Datenanreicherungsverfahren (Data Augmentation) wird z.B. versucht, mittels Simulation verschiedener akustischer Bedingung [68] und auch künstlicher Überlagerung verschiedener Klangquellen eine höhere Robustheit & Invarianz der Modelle zu erreichen. Weiterhin können die Parameter in komplexen neuronalen Netzwerken unterschiedlich regularisiert werden, so dass ein Übertrainieren & Spezialisieren auf die Trainingsdaten verhindert wird und gleichzeitig eine bessere Generalisierung auf ungesehene Daten erreicht wird. In den letzten Jahren wurden verschiedene Algorithmen zur "Domain Adaptation" [67] vorgeschlagen, um bereits trainierte Modelle auf neue Anwendungsbedingungen anzupassen. In dem in diesem Projekt geplanten Einsatzszenario innerhalb eines Kopfhörers ist eine Echtzeitfähigkeit der Klangquellenerkennungsalgorithmen von elementarer Bedeutung. Hierbei muss zwangsläufig eine Abwägung zwischen Komplexität des neuronalen Netzes und der maximal möglichen Anzahl von Rechenoperationen auf der zugrundeliegenden Rechenplattform durchgeführt werden. Auch wenn ein Klangereignis eine längere Dauer hat, muss es trotzdem möglichst schnell erkannt werden, um eine entsprechende Quellentrennung zu starten.

Am Fraunhofer IDMT erfolgte in den letzten Jahren eine Vielzahl an Forschungsarbeiten im Bereich der automatischen Klangquellenerkennung. Im Forschungsprojekt "StadtLärm" wurde ein verteiltes Sensornetzwerk entwickelt, welches anhand von aufgenommenen Audiosignalen an verschiedenen Standorten innerhalb einer Stadt sowohl Lärmpegel messen kann als auch zwischen 14 verschiedenen akustischen Szenen- und Ereignisklassen klassifizieren kann [69]. Die Verarbeitung in den Sensoren auf der Embedded-Plattform Raspberry Pi 3 erfolgt dabei in Echtzeit. In einer Vorarbeit wurden neuartige Ansätze zur Datenkompression von Spektrogrammen basierend auf Autoencoder-Netzwerken untersucht [71]. Die Anwendung von Verfahren aus dem Deep Learning im Bereich Musiksignalverarbeitung (Music Information Retrieval) konnten zuletzt in Anwendungen wie Musiktranskription [76], [77], Akkorderkennung [78] und Instrumentenerkennung [79] große Fortschritte erzielt werden. Im Bereich der industriellen Audioverarbeitung wurden neue Datensätze etabliert und Verfahren des Deep Learning z.B. zur akustischen Zustandsüberwachung von elektrischen Motoren genutzt [75].

In dem in diesem Ausführungsbeispiel adressierten Szenario muss von mehreren Klangquellen ausgegangen werden, deren Anzahl und Typ zunächst unbekannt ist und sich ständig ändern kann. Für die Klangquellen-trennung sind besonders mehrere Quellen mit ähnlichen Charakteristika wie z.B. mehrere Sprecher eine große Herausforderung [80].

Um eine hohe räumliche Auflösung zu erreichen, müssen mehrere Mikrofone in Form eines Arrays verwendet werden [72]. Im Gegensatz zu üblichen Audioaufnahmen in mono (1 Kanal) oder stereo (2 Kanäle) erlaubt solch ein Aufnahmeszenario eine genaue Lokalisation der Schallquellen um den Hörer.

Quellentrennungsalgorithmen hinterlassen üblicherweise Artefakte wie Verzerrungen und Übersprechen zwischen den Quellen [5], welche vom Hörer im Allgemeinen als störend empfunden werden. Durch ein erneutes Mischen der Spuren (Re-Mixing) können solche Artefakte aber zum Teil maskiert und damit reduziert werden [10].

Zur Verbesserung der "blinden" Quellentrennung (Blind Source Separation) werden oftmals Zusatzinformationen wie z.B. erkannte Anzahl und Art der Quellen oder ihre geschätzte räumliche Position genutzt (Informed Source Separation [74]). Für Meetings, in dem mehrere Sprecher aktiv sind, können aktuelle Analysesysteme gleichzeitig die Anzahl der Sprecher schätzen, ihre jeweilige zeitliche Aktivität bestimmen und sie anschließend per Quellentrennung isolieren [66].

Am Fraunhofer IDMT wurden in den letzten Jahren viele Untersuchungen zur perzeptionsbasierten Evaluation von Klangquellentrennungsalgorithmen durchgeführt. [73]

Im Bereich der Musiksignalverarbeitung wurde ein echtzeitfähiger Algorithmus zur Trennung des Soloinstruments sowie der Begleitinstrumente entwickelt, welcher eine Grundfrequenzschätzung des Soloinstruments als Zusatzinformation ausnutzt [81]. Ein alternativer Ansatz zur Gesangsseparation aus komplexen Musikstücken, der auf Deep Learning Methoden basiert, wurde in [82] vorgestellt. Für die Anwendung im Rahmen der industriellen Audioanalyse wurden ebenfalls spezialisierte Quellentrennungsalgorithmen entwickelt [7].

Kopfhörer beeinflussen die akustische Wahrnehmung der Umgebung maßgeblich. Je nach Bauart des Kopfhörers wird der Schalleinfall auf den Weg zu den Ohren unterschiedlich stark gedämpft. In-Ear-Kopfhörer blockieren die Ohrkanäle vollständig [85]. Die Ohrmuschel umschließende, geschlossene Kopfhörer schneiden den Hörer akustisch ebenfalls stark von der äußeren Umgebung ab. Offene und halboffene Kopfhörer lassen dagegen Schall noch ganz bzw. teilweise durch [84]. In vielen Anwendungen des täglichen Lebens ist es gewünscht, dass Kopfhörer den ungewünschten Umgebungsschall stärker abschotten, als sie es durch ihre Bauart ermöglichen.

Mit Active-Noise-Control (ANC) können störende Einflüsse von außen zusätzlich abgedämpft werden. Dies wird realisiert, in dem eintreffende Schallsignale von Mikrofonen des Kopfhörers aufgenommen und von den Lautsprechern so wiedergegeben werden, dass sich diese Schallanteile mit den Kopfhörer-durchdringenden Schallanteilen durch eine Interferenz auslöschen. Insgesamt kann so eine starke akustische Abschottung von der Umgebung erreicht werden. Dies birgt jedoch in zahlreichen Alltags-situationen Gefahren, weshalb der Wunsch besteht, auf Bedarf diese Funktion intelligent zu schalten.

Erste Produkte erlauben, dass die Mikrofonsignale auch in den Kopfhörer durchgeleitet werden, um die passive Abschottung zu verringern. So gibt es neben Prototypen [86] bereits Produkte, die mit der Funktion "transparentes Hören" werben. Beispielsweise bietet Sennheiser mit dem AMBEO-Headset [88] und Bragi im Produkt "The Dash Pro" die Funktion an. Diese Möglichkeit stellt jedoch erst den Anfang dar. Zukünftig soll diese Funktion stark erweitert werden, so dass nicht nur die vollen Umgebungsgeräusche an- oder ausgeschaltet werden können, sondern einzelne Signalanteile (wie etwa nur Sprache oder Alarmsignale) bei Bedarf ausschließlich hörbar gemacht werden können. Die französische Firma Orosound ermöglicht es dem Träger des Headsets "Tilde Earphones" [89] die Stärke des ANC mit einem Slider anzupassen. Zusätzlich kann die Stimme eines Gesprächspartners auch während aktivierten ANCs durchgeleitet werden. Dies funktioniert jedoch nur, wenn sich der Gesprächspartner in einem 60°-Kegel frontal gegenüber befindet. Eine richtungsunabhängige Anpassung ist nicht möglich.

In der Offenlegungsschrift US 2015 195641 A1 (siehe [91]) wurde ein Verfahren offenbart, welches zur Erzeugung einer Hörumgebung für einen Nutzer ausgelegt ist. Dabei umfasst das Verfahren ein Empfangen eines Signals, das eine ambiente Hörumgebung des Nutzers darstellt, ferner eine Verarbeitung des Signals unter Verwendung eines Mikroprozessors, um zumindest einen Klangtyp einer Mehrzahl von Klangtypen in der ambienten Hörumgebung zu identifizieren. Des Weiteren umfasst das Verfahren einen Empfang von Nutzerpräferenzen für jeden der Mehrzahl von Klangtypen, ein Modifizieren des Signals für jeden Klangtyp in der ambienten Hörumgebung und eine Ausgabe des modifizierten Signals auf wenigstens einem Lautsprecher um eine Hörumgebung für den Nutzer zu erzeugen.

Ein System nach Anspruch 1, ein Verfahren nach Anspruch 23, und ein Computerprogramm nach Anspruch 24 werden bereitgestellt.

Ein System zur Unterstützung von selektivem Hören nach Anspruch 1 wird bereitgestellt. Das Systerr umfasst einen Detektor zur Detektion eines Audioquellen-Signalanteils von ein oder mehreren Audioquellen unter Verwendung von wenigstens zwei empfangenen Mikrofonsignalen einer Hörumgebung. Des Weiteren umfasst das System einen .Positionsbestimmer zur Zuweisung von Positionsinformation zu jeder der ein oder mehreren Audioquellen. Ferner umfasst das System einen Audiotyp-Klassifikator zur Zuordnung eines Audiosignaltyps zu dem Audioquellen-Signalanteil jeder der ein oder mehreren Audioquellen. Des Weiteren umfasst das System einen Signalanteil-Modifizierer zur Veränderung des Audioquellen-Signalanteils von wenigstens einer Audioquelle der ein oder mehreren Audioquellen abhängig von dem Audiosignaltyp des Audioquellen-Signalanteils der wenigstens einen Audioquelle, um einen modifizierten Audiosignalanteil der wenigstens einen Audioquelle zu erhalten. Ferner umfasst das System einen Signalgenerator zur Erzeugung von einer Mehrzahl von binauralen Raumimpulsantworten für jede Audioquelle der ein oder mehreren Audioquellen abhängig von der Positionsinformation dieser Audioquelle und einer Orientierung eines Kopfes eines Nutzers, und zur Erzeugung von wenigstens zwei Lautsprechersignalen abhängig von der Mehrzahl der binauralen Raumimpulsantworten und abhängig von dem modifizierten Audiosignalanteil der wenigstens einen Audioquelle.

Des Weiteren wird ein Verfahren zur Unterstützung von selektivem Hören nach Anspruch 23 bereitgestellt.

Das Verfahren umfasst:
- Detektion eines Audioquellen-Signalanteils von ein oder mehreren Audioquellen unter Verwendung von wenigstens zwei empfangenen Mikrofonsignalen einer Hörumgebung.
- Zuweisung von Positionsinformation zu jeder der ein oder mehreren Audioquellen.
- Zuordnung eines Audiosignaltyps zu dem Audioquellen-Signalanteil jeder der ein oder mehreren Audioquellen.
- Veränderung des Audioquellen-Signalanteils von wenigstens einer Audioquelle der ein oder mehreren Audioquellen abhängig von dem Audiosignaltyp des Audioquellen-Signalanteils der wenigstens einen Audioquelle, um einen modifizierten Audiosignalanteil der wenigstens einen Audioquelle zu erhalten. Und:
- Erzeugung von einer Mehrzahl von binauralen Raumimpulsantworten für jede Audioquelle der ein oder mehreren Audioquellen abhängig von der Positionsinformation dieser Audioquelle und einer Orientierung eines Kopfes eines Nutzers, und Erzeugung von wenigstens zwei Lautsprechersignalen abhängig von der Mehrzahl der binauralen Raumimpulsantworten und abhängig von dem modifizierten Audiosignalanteil der wenigstens einen Audioquelle.

Ferner wird ein Computerprogramm mit einem Programmcode zur Durchführung des oben beschriebenen Verfahrens bereitgestellt.

Des Weiteren wird eine Vorrichtung zur Bestimmung von ein oder mehreren Raumakustik-Parametern diskutiert, die nicht Teil der Erfindung ist, aber deren Diskussion zum Verständnis der Erfindung beiträgt.

Die Vorrichtung ist ausgebildet, Mikrofon-Daten zu erhalten, die ein oder mehrere Mikrofonsignale umfassen. Ferner ist die Vorrichtung ausgebildet, Nachverfolgungsdaten betreffend eine Position und/oder eine Orientierung eines Nutzers zu erhalten. Darüber hinaus ist die Vorrichtung ausgebildet, die ein oder mehreren Raumakustik-Parameter abhängig von den Mikrofon-Daten und abhängig von den Nachverfolgungsdaten zu bestimmen.

Ferner wird ein Verfahren zur Bestimmung von ein oder mehreren Raumakustik-Parametern bereitgestellt. Das Verfahren und ein entsprechendes ein Computerprogramm mit einem Programmcode zur Durchführung des Verfahrens sind ebenfalls nicht Teil der Erfindung, ihre Diskussion trägt aber zum Verständnis der Erfindung bei.

Ausführungsformen basieren unter anderem darauf, unterschiedliche Techniken zur Hörunterstützung in technischen Systemen einzubauen und so zu kombinieren, dass eine Verbesserung der Klang- und Lebensqualität (d.h. dass ensprechend der Erfindung erwünschter Schall lauter, unerwünschter Schall leiser, bessere Sprachverständlichkeit) sowohl für normalhörende als auch für Menschen mit Schädigungen des Gehörs erzielt wird.

Nachfolgend werden bevorzugte Ausführungsformen der Erfindung unter Bezugnahme auf die Zeichnungen beschrieben.

In den Zeichnungen ist dargestellt:
- Fig. 1: zeigt ein System zur Unterstützung von selektivem Hören gemäß einer Ausführungsform.
- Fig. 2: zeigt ein System gemäß einer Ausführungsform, das zusätzlich eine Benutzeroberfläche umfasst.
- Fig. 3: zeigt ein System gemäß einer Ausführungsform, dass ein Hörgerät mit zwei entsprechenden Lautsprechern umfasst.
- Fig. 4: zeigt ein System gemäß einer Ausführungsform, das eine Gehäusestruktur und zwei Lausprecher umfasst.
- Fig. 5: zeigt ein System gemäß einer Ausführungsform, das einen Kopfhörer mit zwei Lautsprechern umfasst.
- Fig. 6: zeigt ein System gemäß einer Ausführungsform, das ein entferntes Gerät 190 umfasst, das den Detektor und den Positionsbestimmer und den Audiotyp-Klassifikator und den Signalanteil-Modifizierer und den Signalgenerator umfasst.
- Fig. 7: zeigt ein System gemäß einer Ausführungsform, das fünf Sub-Systeme umfasst.
- Fig. 8: stellt ein entsprechendes Szenario gemäß einem Ausführungsbeispiel dar.
- Fig. 9: stellt ein Szenario gemäß einer Ausführungsform mit vier externen Schallquellen dar.
- Fig. 10: stellt einen Verarbeitungsworkflow einer SH-Anwendung gemäß einer Ausführungsform dar.

Brillen helfen im heutigen Leben sehr vielen Menschen, ihre Umgebung besser wahrzunehmen. Für das Hören gibt es zwar Hörgeräte, aber in vielen Situationen können auch normal Hörende von der Unterstützung durch intelligente Systeme profitieren:
Oft ist es in der Umgebung zu laut, sind nur bestimmte Geräusche störend, und man will selektiv hören. Das kann das menschliche Gehirn schon gut, aber weitere intelligente Hilfen können dieses selektive Hören in Zukunft noch deutlich verbessern. Um solche solche "intelligenten Hearables" (Hörgeräte) zu realisieren, ist durch das technische System die (akustische) Umgebung zu analysieren, einzelne Klangquellen sind zu identifizieren, um diese getrennt voneinander behandeln zu können. Zu diesen Themen gibt es Vorarbeiten, aber eine in Echtzeit (transparent für unsere Ohren) und mit hoher Tonqualität (damit das Gehörte von einer normalen akustischen Umgebung nicht unterscheidbar ist) arbeitende Analyse und Verarbeitung der gesamten akustischen Umgebung wurde im Stand der Technik noch nicht realisiert.

Nachfolgend werden verbesserte Konzepte für maschinelles Hören (engl.: Machine Listening) bereitgestellt.

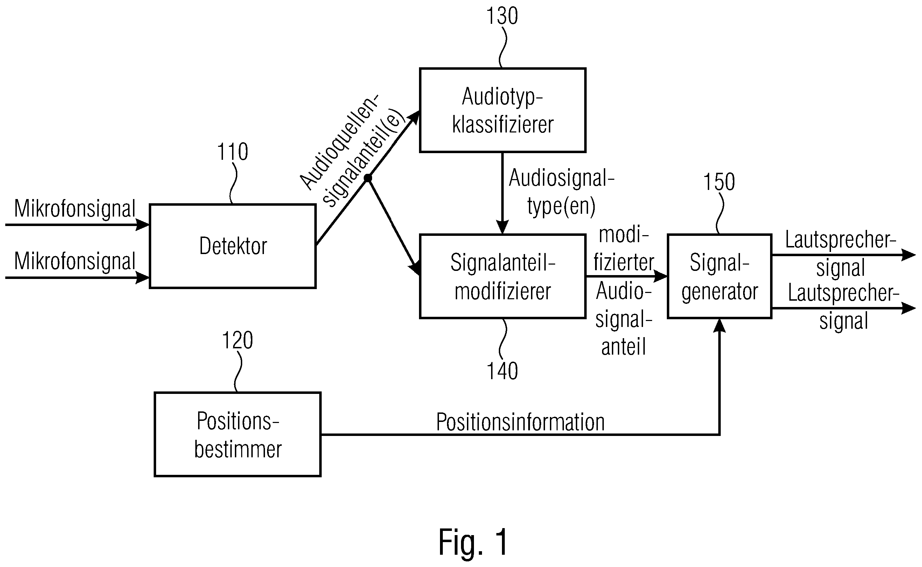

Fig. 1 zeigt ein System zur Unterstützung von selektivem Hören gemäß einem Ausführungsbeispiel.

Das System umfasst einen Detektor 110 zur Detektion eines Audioquellen-Signalanteils von ein oder mehreren Audioquellen unter Verwendung von wenigstens zwei empfangenen Mikrofonsignalen einer Hörumgebung.

Des Weiteren umfasst das System einen .Positionsbestimmer 120 zur Zuweisung von Positionsinformation zu jeder der ein oder mehreren Audioquellen.

Ferner umfasst das System einen Audiotyp-Klassifikator 130 zur Zuordnung eines Audiosignaltyps zu dem Audioquellen-Signalanteil jeder der ein oder mehreren Audioquellen.

Des Weiteren umfasst das System einen Signalanteil-Modifizierer 140 zur Veränderung des Audioquellen-Signalanteils von wenigstens einer Audioquelle der ein oder mehreren Audioquellen abhängig von dem Audiosignaltyp des Audioquellen-Signalanteils der wenigstens einen Audioquelle, um einen modifizierten Audiosignalanteil der wenigstens einen Audioquelle zu erhalten.

Ferner umfasst das System einen Signalgenerator 150 zur Erzeugung von einer Mehrzahl von binauralen Raumimpulsantworten für jede Audioquelle der ein oder mehreren Audioquellen abhängig von der Positionsinformation dieser Audioquelle und einer Orientierung eines Kopfes eines Nutzers, und zur Erzeugung von wenigstens zwei Lautsprechersignalen abhängig von der Mehrzahl der binauralen Raumimpulsantworten und abhängig von dem modifizierten Audiosignalanteil der wenigstens einen Audioquelle.

Gemäß einer Ausführungsform kann der Detektor 110 z.B. ausgebildet sein, den Audioquellen-Signalanteil der ein oder mehreren Audioquellen unter Verwendung von Deep Learning Modellen zu detektieren.

In einer Ausführungsform kann die Positionsbestimmer 120 z.B. ausgebildet sein, die zu jedem der ein oder mehreren Audioquellen die Positionsinformation abhängig von einem aufgenommenen Bild oder von einem aufgenommenen Video zu bestimmen.

Gemäß einer Ausführungsform kann der Positionsbestimmer 120 z.B. ausgebildet sein, die zu jedem der ein oder mehreren Audioquellen die Positionsinformation abhängig von dem Video zu bestimmen, indem eine Lippenbewegung einer Person in dem Video detektiert wird und abhängig von der Lippenbewegung dem Audioquellen-Signalanteil eines der ein oder mehreren Audioquellen zugeordnet wird.

In einer Ausführungsform kann der Detektor 110 z.B. ausgebildet sein, ein oder mehrere akustische Eigenschaften der Hörumgebung abhängig von den wenigstens zwei empfangenen Mikrofonsignalen zu bestimmen.

Gemäß einer Ausführungsform kann der Signalgenerator 150 z.B. ausgebildet sein, die Mehrzahl der binauralen Raumimpulsantworten abhängig von den ein oder mehreren akustischen Eigenschaften der Hörumgebung zu bestimmen.

Entsprechend der Erfindung ist der Signalanteil-Modifizierer 140 ausgebildet, die wenigstens eine Audioquelle, deren Audioquellen-Signalanteil modifiziert wird, abhängig von einem zuvor erlernten Benutzerszenario auszuwählen und abhängig von dem zuvor erlernten Benutzerszenario zu modifizieren.

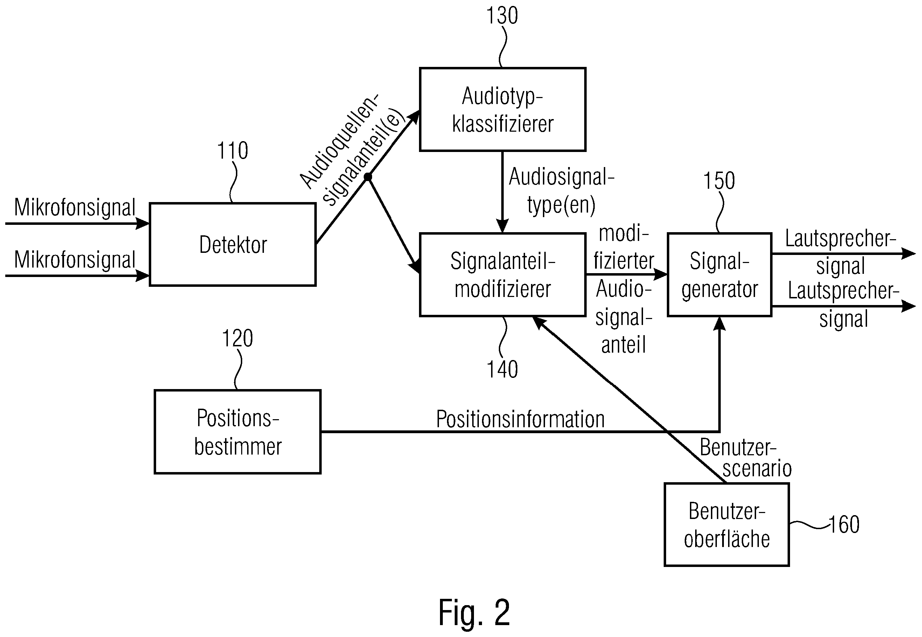

Gemäß einer Ausführungsform kann das System z.B. eine Benutzeroberfläche 160 zur Auswahl des zuvor erlernten Benutzerszenarios aus einer Gruppe von zwei oder mehreren zuvor erlernten Benutzerszenarien umfassen. Fig. 2 zeigt ein solches System gemäß einer Ausführungsform, das zusätzlich eine derartige Benutzeroberfläche 160 umfasst.

In einer Ausführungsform kann der Detektor 110 und/oder der Positionsbestimmer 120 und/oder der Audiotyp-Klassifikator 130 und/oder der Signalanteil-Modifizierer 140 und/oder der Signalgenerator 150 z.B. ausgebildet sein, parallele Signalverarbeitung unter Verwendung einer Hough-Transformation oder unter Einsatz einer Mehrzahl von VLSI-Chips oder unter Einsatz einer Mehrzahl von Memristoren durchzuführen.

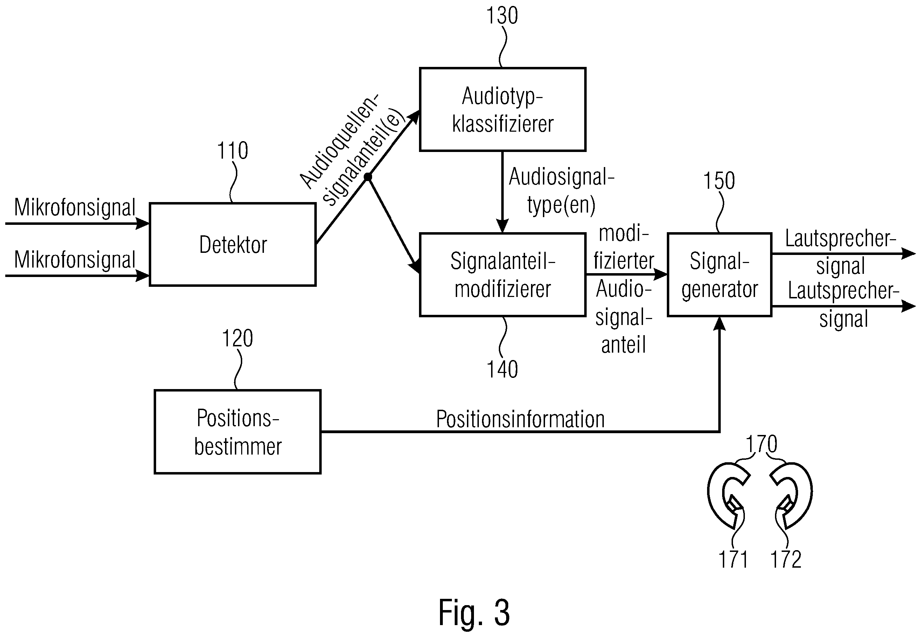

Gemäß einer Ausführungsform kann das System z.B. ein Hörgerät 170 umfassen, das als Hörhilfe für in ihrer Hörfähigkeit eingeschränkte und/oder hörgeschädigte Nutzer dient, wobei das Hörgerät wenigstens zwei Lautsprecher 171, 172 zur Ausgabe der wenigstens zwei Lautsprechersignale umfasst. Fig. 3 zeigt ein solches System gemäß einer Ausführungsform, dass ein derartiges Hörgerät 170 mit zwei entsprechenden Lautsprechern 171, 172 umfasst.

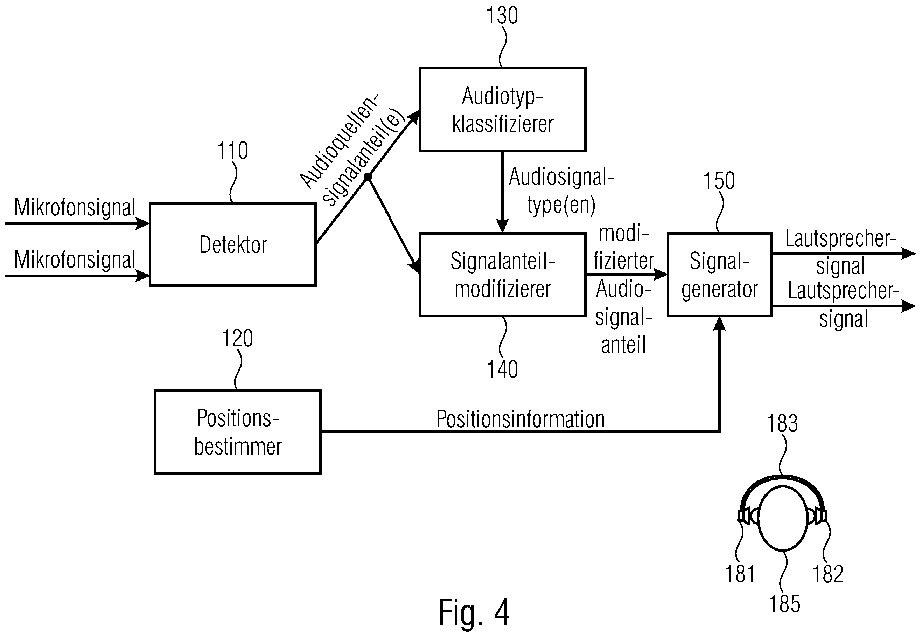

In einer Ausführungsform kann das System z.B. wenigstens zwei Lautsprecher 181, 182 zur Ausgabe der wenigstens zwei Lautsprechersignale und eine Gehäusestruktur 183 umfassen, die die wenigstens zwei Lautsprecher aufnimmt, wobei die mindestens eine Gehäusestruktur 183 geeignet ist, an einem Kopf 185 eines Nutzers oder einem anderen Körperteil des Nutzers befestigt zu werden. Fig. 4 zeigt ein entsprechendes System, das eine derartige Gehäusestruktur 183 und zwei Lausprecher 181, 182 umfasst.

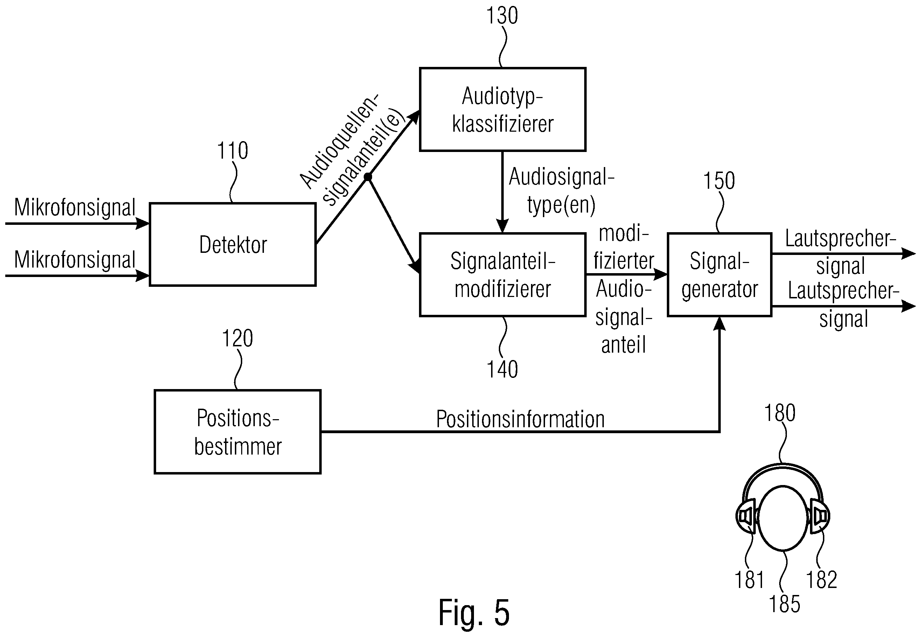

Gemäß einer Ausführungsform kann das System z.B. einen Kopfhörer 180 umfassen, der wenigstens zwei Lautsprecher 181, 182 zur Ausgabe der wenigstens zwei Lautsprechersignale umfasst. Fig. 5 zeigt einen entsprechenden Kopfhörer 180 mit zwei Lautsprechern 181, 182 gemäß einer Ausführungsform.

In einer Ausführungsform kann z.B. der Detektor 110 und der Positionsbestimmer 120 und der Audiotyp-Klassifikator 130 und der Signalanteil-Modifizierer 140 und der Signalgenerator 150 in den Kopfhörer 180 integriert sein.

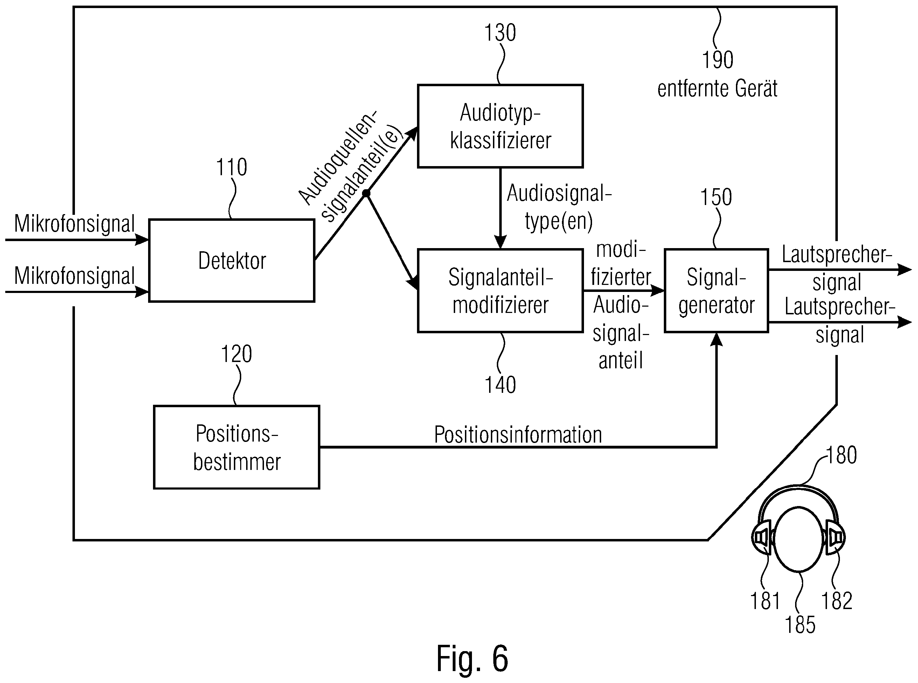

Gemäß einer Ausführungsform, dargestellt in Fig. 6 kann das System z.B. ein entferntes Gerät 190 umfassen, das den Detektor 110 und den Positionsbestimmer 120 und den Audiotyp-Klassifikator 130 und den Signalanteil-Modifizierer 140 und den Signalgenerator 150 umfasst. Das entfernte Gerät 190 kann dabei z.B. von dem Kopfhörer 180 räumlich getrennt sein.

In einer Ausführungsform kann das entfernte Gerät 190 z.B. ein Smartphone sein.

Ausführungsformen nutzen nicht zwanghaft einen Mikroprozessor, sondern verwenden parallele Signalverarbeitungsschritte, wie z.B. Hough-Transformation, VLSI-Chips oder Memristoren zur stromsparenden Realisierung, u.a. auch von künstlichen neuronalen Netzen.

In Ausführungsformen wird die auditorische Umgebung räumlich erfasst und wiedergegeben, was einerseits mehr als ein Signal zur Repräsentation des Eingangssignals, andererseits auch eine räumliche Wiedergabe nutzt.

In Ausführungsformen erfolgt die Signaltrennung mittels Deep Learning (DL) Modellen (z.B. CNN, RCNN, LSTM, Siamese Network) und bearbeitet simultan die Informationen von mindestens zwei Mikrofonkanälen, wobei mindestens ein Mikrofon in jedem Hearable ist. Erfindungsgemäß werden durch die gemeinsame Analyse mehrere Ausgangssignale (entsprechend den einzelnen Klangquellen) zusammen mit ihrer jeweiligen räumlichen Position bestimmt. Ist die Aufnahmeeinrichtung (Mikrofone) mit dem Kopf verbunden, dann verändern sich die Positionen der Objekte bei Kopfbewegungen. Dies ermöglicht eine natürliche Fokussierung auf wichtigen/unwichtigen Schall, z.B. durch Hinwendung zum Schallobjekt durch den Hörer.

In manchen Ausführungsformen beruhen die Algorithmen zur Signalanalyse beispielsweise auf einer Deep Learning Architektur. Dabei werden alternativ Varianten mit einem Analysator oder Varianten mit getrennten Netzen für die Aspekte Lokalisierung, Erkennung und Quellentrennung verwendet. Durch die alternative Verwendung von generalized crosscorrelation (Korrelation versus Zeitversatz) wird der Frequenzabhängigen Abschattung durch den Kopf Rechnung getragen und die Lokalisierung, Erkennung und Quellentrennung verbessert.

Gemäß einer Ausführungsform werden in einer Trainingsphase durch den Erkenner verschiedene Quellenkategorien (z.B. Sprache, Fahrzeuge, männlich/weiblich/Kinderstimme, Warntöne, etc.) gelernt. Hierbei werden auch die Quelltrennungsnetze auf hohe Signalqualität trainiert, sowie die Lokalisationsnetze mit gezielten Stimuli auf eine hohe Genauigkeit der Lokalisation.

Die oben genannte Trainingsschritte benutzen beispielsweise mehrkanalige Audiodaten, wobei in der Regel ein erster Trainingsdurchgang im Labor mit simulierten oder aufgezeichneten Audiodaten erfolgt. Dies ist gefolgt von einem Trainingsdurchgang in unterschiedlichen natürlichen Umgebungen (z.B. Wohnzimmer, Klassenzimmer, Bahnhof, (industrielle) Produktionsumgebungen, etc.), d.h. es erfolgt ein Transfer Learning und eine Domain Adaptation.

Alternativ oder zusätzlich könnte der Erkenner für die Position mit einer oder mehreren Kameras gekoppelt werden um auch die visuelle Position von Schallquellen zu bestimmen. Bei Sprache werden hierbei Lippenbewegung und die aus dem Quellentrenner kommenden Audiosignale korreliert und damit eine genauere Lokalisation erzielt.

Nach dem Training existiert ein DL-Modell mit Netzarchitektur und den dazugehörigen Parametern,

In manchen Ausführungsformen erfolgt die Auralisierung mittels Binauralsynthese. Die Binauralsynthese bietet den weiteren Vorteil, dass es möglich ist unerwünschte Komponenten nicht vollständig zu löschen, sondern nur soweit zu reduzieren, dass sie wahrnehmbar aber nicht störend sind. Dies hat den weiteren Vorteil das unerwartete weitere Quellen (Warnsignale, Rufe,...) wahrgenommen, welche bei einem kompletten Abschalten überhört würden.

Gemäß mancher Ausführungsformen wird die Analyse der auditorischen Umgebung nicht nur zur Trennung der Objekte verwendet sondern auch zur Analyse der akustischen Eigenschaften (z.B. Nachhallzeit, Initital Time Gap) verwendet. Diese Eigenschaften werden dann in der Binauralsynthese eingesetzt um die vorgespeicherten (evtl. auch individualisierten) binauralen Raumimpulsantworten (BRIR) an den tatsächlichen Raum anzupassen. Durch die Reduktion der Raumdivergenz hat der Hörer eine deutlich reduzierte Höranstrengung beim Verstehen der optimierten Signale. Eine Minimierung der Raumdivergenz hat Auswirkung auf die Externalisierung der Hörereignisse und somit auf die Plausibilität der räumlichen Audiowiedergabe im Abhörraum. Zum Sprachverstehen oder zum allgemeinem Verstehen von optimierten Signalen existieren im Stand der Technik keine bekannten Lösungen.

In Ausführungsformen wird mittels einer Benutzeroberfläche bestimmt, welche Schallquellen ausgewählt werden. Erfindungsgemäß erfolgt dies hier durch das vorherige Lernen unterschiedlicher Benutzerszenarien, wie z.B. "verstärke Sprache genau von vorne" (Gespräch mit einer Person), "verstärke Sprache im Bereich +-60 Grad" (Gespräch in der Gruppe), "unterdrücke Musik und verstärke Musik" (Konzertbesucher will ich nicht hören), "mach alles Leise" (ich will meine Ruhe), "unterdrücke alles Rufe und Warntöne", etc.

Manche Ausführungsformen sind unabhängig von der verwendeten Hardware, d.h. sowohl offene als auch geschlossene Kopfhörer können verwendet werden. Die Signalverarbeitung kann in den Kopfhörer integriert sein, in einem externen Gerät sein, oder auch in einem Smartphone integriert sein. Optional können zusätzlich zur Wiedergabe von akustisch aufgenommenen und verarbeiteten Signalen auch Signale aus dem Smartphone (z.B. Musik, Telefonie) direkt wiedergegeben werden.

In anderen Ausführungsformen wird ein Ökosystem für "selektives Hören mit KI-Unterstützung" bereitgestellt. Ausführungsbeispiele beziehen sich auf die "personalisierte auditorische Realität" (Personalized Auditory Reality - PARty). In einer solchen personalisierten Umgebung ist der Hörer in der Lage, definierte akustische Objekte zu verstärken, zu mindern oder zu modifizieren. Zur Erschaffung eines an die individuellen Bedürfnisse angepassten Klangerlebnisses sind eine Reihe von Analyse- und Synthesevorgängen durchzuführen. Die Arbeiten der anvisierten Umsetzungsphase bilden hierfür einen essentiellen Baustein.

Manche Ausführungsformen realisieren die Analyse der realen Schallumgebung und Erfassung der einzelnen akustischen Objekte, die Separation, Verfolgung und Editierbarkeit der vorhandenen Objekte und die Rekonstruktion und die Wiedergabe der modifizierten akustischen Szene.

In Ausführungsbeispielen wird eine Erkennung von Klangereignissen, eine Trennung der Klangereignisse, und eine Unterdrückung mancher der Klangereignisse realisiert.

In Ausführungsformen kommen KI-Verfahren (insbesondere Deep-Learning-basierte Verfahren gemeint) zum Einsatz.

Ausführungsformen der Erfindung tragen zur technologischen Entwicklung für Aufnahme, Signalverarbeitung und Wiedergabe von räumlichem Audio bei.

Ausführungsformen erzeugen z.B. Räumlichkeit und Dreidimensionalität in multimedialen Systemen bei interagierendem Nutzer

Ausführungsbeispiele basieren dabei auf erforschtem Wissen von perzeptiven und kognitiven Vorgängen des räumlichen Hörens.

Manche Ausführungsformen nutzen zwei oder mehrere der nachfolgenden Konzepte:
Szenenzerlegung: Dies umfasst eine raumakustische Erfassung der realen Umgebung und Parameterschätzung und/oder eine positionsabhängige Schallfeldanalyse.
Szenenrepräsentation: Dies umfasst eine Repräsentation und Identifikation der Objekte und der Umgebung und/oder eine effiziente Darstellung und Speicherung.
Szenenzusammensetzung und Wiedergabe: Dies umfasst eine Anpassung und Veränderung der Objekte und der Umgebung und/oder ein Rendering und eine Auralisierung.
Qualitätsevaluierung: Dies umfasst technische und/oder auditive Qualitätsmessung.
Mikrofonierung: Dies umfasst eine Anwendung von Mikrofonarrays und passender Audiosignalverarbeitung.
Signalaufbereitung: Dies umfasst eine Merkmalsextraktion sowie Datensatzerzeugung für ML (Maschinelles Lernen).
Schätzung Raum- und Umgebungsakustik: Dies umfasst eine in-situ Messung und Schätzung raumakustischer Parameter und/oder eine Bereitstellung von Raumakustikmerkmalen für Quellentrennung und ML.
Auralisierung: Dies umfasst eine räumliche Audiowiedergabe mit auditiver Passung zur Umgebung und /oder eine Validierung und Evaluierung und/oder einen Funktionsnachweis und eine Qualitätsabschätzung.

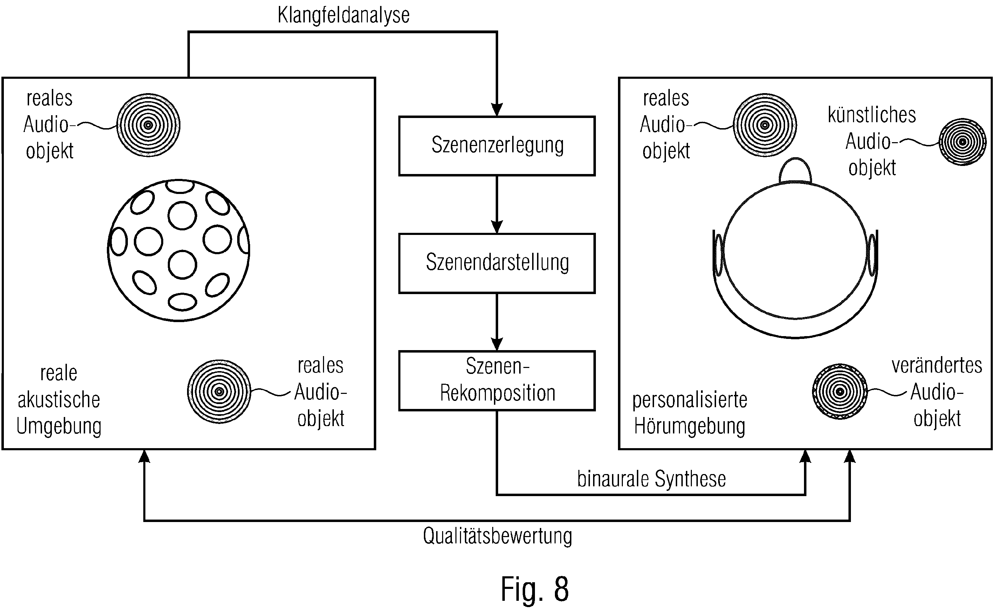

Fig. 8 stellt ein entsprechendes Szenario gemäß einem Ausführungsbeispiel dar.

Ausführungsformen kombinieren Konzepte für die Erfassung, Klassifikation, Trennung, Lokalisation und Verbesserung von Schallquellen, wobei jüngste Fortschritte in jedem Bereich hervorgehoben und Zusammenhänge zwischen ihnen aufgezeigt werden.

Es werden einheitliche Konzepte bereitgestellt, die Schallquellen kombinieren erfassen/klassifizieren/lokalisieren und trennen/verbessern können, um sowohl die für SH im echten Leben erforderliche Flexibilität als auch Robustheit bereitzustellen.

Ferner stellen Ausführungsformen für Echtzeitleistung geeignete Konzepte mit einer geringen Latenz sind im Umgang mit der Dynamik auditiver Szenen im echten Leben bereit.

Manche der Ausführungsformen nutzen Konzepte für tiefes Lernen (engl.: Deep Learning), maschinelles Hören und smarte Kopfhörer (engl.: smart hearables), die es Hörern ermöglichen, ihre auditive Szene selektiv zu modifizieren.

Ausführungsformen stellen dabei die Möglichkeit für einen Hörer bereit, Schallquellen in der auditiven Szene mittels einer Hörvorrichtung wie Kopfhörern, Ohrhörern etc. selektiv zu verbessern, zu dämpfen, zu unterdrücken oder zu modifizieren.

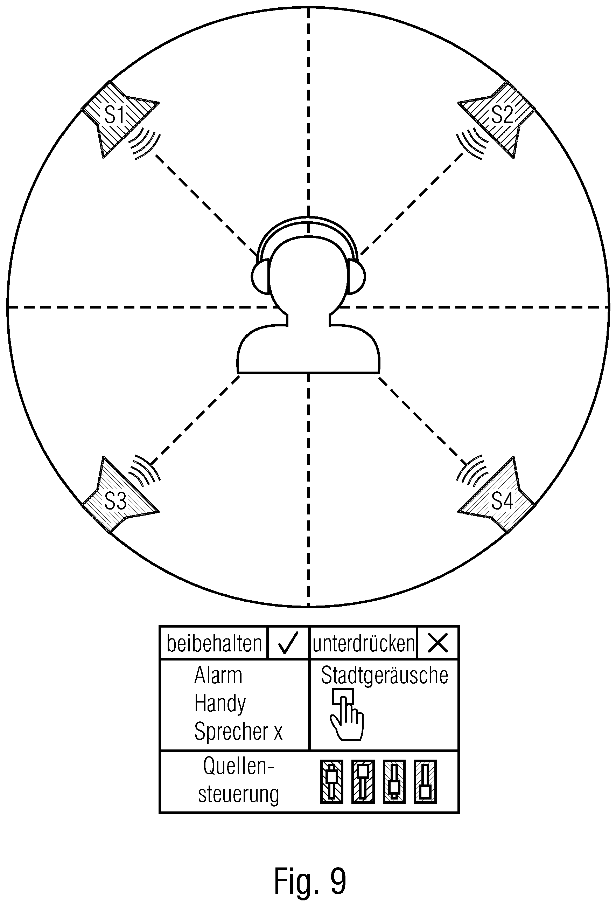

Fig. 9 stellt ein Szenario gemäß einer Ausführungsform mit vier externen Schallquellen dar. (In Fig. 9 bedeuten: Keep - Beibehalten; Suppress - Unterdrücken; Alarm - Alarm; Cellphone - Handy; Speaker X - Sprecher X; City Noise - Stadtgeräusche; Source Control - Quellensteuerung).

In Fig. 9 stellt der Benutzer den Mittelpunkt der auditiven Szene dar. In diesem Fall sind vier externe Schallquellen (S1-S4) um den Benutzer herum aktiv. Eine Benutzerschnittstelle ermöglicht es dem Hörer, die auditive Szene zu beeinflussen. Die Quellen S1-S4 können mit ihren entsprechenden Schiebern gedämpft, verbessert oder unterdrückt werden. Wie in Fig. 1 zu sehen ist, kann der Hörer Schallquellen oder - ereignisse definieren, die beibehalten werden sollen oder in der auditiven Szene unterdrückt werden sollen. In Fig. 1 sollen die Hintergrundgeräusche der Stadt unterdrückt werden, während Alarme oder das Klingeln von Telefonen beibehalten werden sollen. Der Benutzer hat jederzeit die Möglichkeit, einen zusätzlichen Audiostream wie Musik oder Radio über die Hörvorrichtung abzuspielen.

Der Benutzer ist in der Regel der Mittelpunkt des Systems und steuert die auditive Szene mittels einer Steuereinheit. Der Benutzer kann die auditive Szene mit einer Benutzerschnittstelle wie der in Fig. 9 dargestellten oder mit jeder beliebigen Art von Interaktion wie Sprachsteuerung, Gesten, Blickrichtung etc. modifizieren. Sobald der Benutzer Feedback an das System gegeben hat, besteht der nächste Schritt in einer Erfassungs-/Klassifikations-/Lokalisationsstufe. In einigen Fällen ist nur die Erfassung notwendig, z. B. wenn der Benutzer jede in der auditiven Szene auftretende Sprachäußerung beibehalten möchte. In anderen Fällen könnte Klassifikation notwendig sein, z. B. wenn der Benutzer Feueralarme in der auditiven Szene beibehalten möchte, jedoch nicht Telefonklingeln oder Bürolärm. In einigen Fällen ist nur der Standort der Quelle für das System relevant. Dies ist zum Beispiel bei den vier Quellen in Fig. 9 der Fall: Der Benutzer kann sich dazu entscheiden, die aus einer bestimmten Richtung kommende Schallquelle zu entfernen oder zu dämpfen, unabhängig von der Art oder den Charakteristika der Quelle.

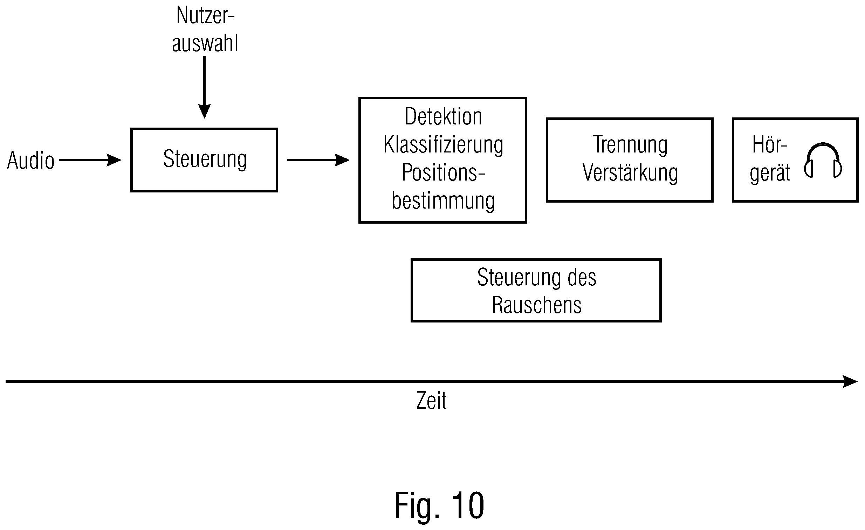

Fig. 10 stellt einen Verarbeitungsworkflow einer SH-Anwendung gemäß einer Ausführungsform dar.

Die auditive Szene wird zuerst in der Stufe der *Trennung*/*Verbesserung* in Fig. 10 modifiziert. Dies geschieht entweder durch Unterdrücken, Dämpfen oder Verbessern einer bestimmten Schallquelle (bzw. von bestimmten Schallquellen). Wie in Fig. 10 gezeigt ist, besteht eine zusätzliche Verarbeitungsalternative bei dem SH in der Rauschsteuerung, bei der es das Ziel ist, das Hintergrundrauschen aus der auditiven Szene zu entfernen oder es darin zu minimieren. Die vielleicht beliebteste und am weitesten verbreitete Technologie zur Rauschsteuerung ist heute Antischall (engl.: Active Noise Control, ANC) [11].

Man unterscheidet selektives Hören von virtuellen und verstärkten auditiven Umgebungen, indem wir selektives Hören auf diejenigen Anwendungen beschränken, bei denen nur echte Audioquellen in der auditiven Szene modifiziert werden, ohne zu versuchen, der Szene irgendwelche virtuellen Quellen hinzuzufügen.

Aus einer Perspektive des maschinellen Hörens erfordern es Anwendungen für selektives Hören, dass Technologien Schallquellen automatisch erfassen, lokalisieren, klassifizieren, trennen und verbessern. Um die Terminologie bezüglich selektivem Hören weiter zu verdeutlichen, definieren wir die folgenden Begriffe, wobei wir deren Unterschiede und Zusammenhänge hervorheben:
In Ausführungsformen wird z.B. Schallquellenlokalisation (engl.: Sound Source Localization) genutzt, die sich auf die Fähigkeit bezieht, die Position einer Schallquelle in der auditiven Szene zu erfassen. Im Zusammenhang mit Audioverarbeitung bezieht sich ein Quellenstandort üblicherweise auf die Ankunftsrichtung (engl.: direction of arrival, DOA) einer gegebenen Quelle, die entweder als 2D-Koordinate (Azimut) oder, wenn sie eine Erhöhung umfasst, als 3D-Koordinate gegeben sein kann. Einige Systeme schätzen auch die Entfernung von der Quelle zu dem Mikrofon als Standortinformation [3]. Im Zusammenhang mit Musikverarbeitung bezieht sich der Standort oft auf das Panning der Quelle in der finalen Abmischung und ist üblicherweise als Winkel in Grad angegeben [4].

Gemäß Ausführungsformen wird z.B. Schallquellenerfassung (engl.: Sound Source Detection) genutzt, die sich auf die Fähigkeit bezieht, zu bestimmen, ob irgendeine Instanz eines gegebenen Schallquellentyps in der auditiven Szene vorliegt. Ein Beispiel für einen Erfassungsvorgang besteht darin, zu bestimmen, ob irgendein Sprecher in der Szene anwesend ist. In diesem Zusammenhang geht das Bestimmen der Anzahl von Sprechern in der Szene oder der Identität der Sprecher über den Umfang der Schallquellenerfassung hinaus. Erfassung kann als binärer Klassifikationsvorgang verstanden werden, bei der die Klassen den Angaben "Quelle anwesend" und "Quelle abwesend" entsprechen.

In Ausführungsformen wird z.B. Schallquellenklassifikation (engl.: Sound Source Classification) genutzt, die einer gegebenen Schallquelle oder einem gegebenen Schallereignis eine Klassenbezeichnung aus einer Gruppe vordefinierter Klassen zuordnet. Ein Beispiel für einen Klassifikationsvorgang besteht darin, zu bestimmen, ob eine gegebene Schallquelle Sprache, Musik oder Umgebungsgeräuschen entspricht. Schallquellenklassifikation und -erfassung sind eng zusammenhängende Konzepte. In einigen Fällen enthalten Klassifikationssysteme eine Erfassungsstufe, indem "keine Klasse" als eine der möglichen Bezeichnungen betrachtet wird. In diesen Fällen lernt das System implizit, die Anwesenheit oder Abwesenheit einer Schallquelle zu erfassen, und ist nicht dazu gezwungen, eine Klassenbezeichnung zuzuordnen, wenn keine hinreichenden Hinweise darauf vorliegen, dass irgendeine der Quellen aktiv ist.

Gemäß Ausführungsformen wird z.B. Schallquellentrennung (engl.: Sound Source Separation) genutzt, die sich auf die Extraktion einer gegebenen Schallquelle aus einer Audioabmischung oder einer auditiven Szene bezieht. Ein Beispiel für Schallquellentrennung ist die Extraktion einer Singstimme aus einer Audioabmischung, bei der neben dem Sänger weitere Musikinstrumente simultan gespielt werden [5]. Schallquellentrennung wird in einem selektiven Hörszenario relevant, da es das Unterdrücken von für den Hörer nicht interessanten Schallquellen ermöglicht. Einige Schalltrennungssysteme führen implizit einen Erfassungsvorgang durch, bevor sie die Schallquelle aus der Abmischung extrahieren. Dies ist jedoch nicht zwangsläufig die Regel, und daher heben wir die Unterscheidung zwischen diesen Vorgängen hervor. Zusätzlich dient die Trennung oft als Vorverarbeitungsstufe für andere Analysearten wie Quellenverbesserung [6] oder -klassifikation [7].

In Ausführungsformen wird z.B. Schallquellenidentifizierung (engl.: Sound Source Identification) genutzt, die einen Schritt weiter geht und darauf abzielt, spezifische Instanzen einer Schallquelle in einem Audiosignal zu identifizieren. Sprecheridentifizierung ist heute die vielleicht häufigste Verwendung von Quellenidentifizierung. Das Ziel besteht bei diesem Vorgang darin, zu identifizieren, ob ein spezifischer Sprecher in der Szene anwesend ist. Bei dem Beispiel in Fig. 1 hat der Benutzer "Sprecher X" als eine der in der auditiven Szene beizubehaltenden Quellen ausgewählt. Dies erfordert Technologien, die über die Erfassung und Klassifikation von Sprache hinausgehen, und verlangt sprecherspezifische Modelle, die diese präzise Identifizierung ermöglichen.

Gemäß Ausführungsformen wird z.B. Schallquellenverbesserung (engl.: Sound Source Enhancement) genutzt, die sich auf den Prozess bezieht, das Herausstechen einer gegebenen Schallquelle in der auditiven Szene zu erhöhen [8]. Im Fall von Sprachsignalen besteht das Ziel oft darin, deren Qualitäts- und Verständlichkeitswahrnehmung zu erhöhen. Ein übliches Szenario für Sprachverbesserung ist das Entrauschen von Sprachäußerungen, die durch Rauschen beeinträchtigt sind [9]. Im Zusammenhang von Musikverarbeitung bezieht sich Quellenverbesserung auf das Konzept des Herstellens von Remixen und wird oft durchgeführt, um ein Musikinstrument (eine Schallquelle) in der Abmischung mehr herausstechen zu lassen. Anwendungen zum Herstellen von Remixen verwenden oft Schalltrennungsvorstufen (sound separation front-ends), um Zugriff auf die einzelnen Schallquellen zu erhalten und die Charakteristika der Abmischung zu verändern [10]. Obwohl der Schallverbesserung eine Schallquellentrennungsstufe vorausgehen kann, ist dies nicht immer der Fall, und daher heben wir auch die Unterscheidung zwischen diesen beiden Begriffen hervor.

Im Bereich der Schallquellenerfassung, -klassifikation und -identifizierung (engl.: Sound Source Detection, Classification and Identification) setzen manche der Ausführungsformen z.B. eines des nachfolgenden Konzepte ein, wie z.B. die Erfassung und Klassifikation akustischer Szenen und Ereignisse [18]. In diesem Zusammenhang wurden Methoden für Audioereigniserfassung (engl.: audio event detection, AED) in häuslichen Umgebungen vorgeschlagen, bei denen das Ziel darin besteht, die Zeitgrenzen eines gegebenen Schallereignisses innerhalb von 10-sekündigen Aufnahmen zu erfassen [19], [20]. In diesem besonderen Fall wurden 10 Schallereignisklassen berücksichtigt, darunter Katze, Hund, Sprachäußerung, Alarm und laufendes Wasser. Methoden für die Erfassung polyphoner Schallereignisse (mehrerer simultaner Ereignisse) wurden in der Literatur auch vorgeschlagen [21], [22]. In [21] wird eine Methode für die Erfassung polyphoner Schallereignisse vorgeschlagen, bei der insgesamt 61 Schallereignisse aus Situationen aus dem echten Leben unter Verwendung von Binäre-Aktivität-Detektoren auf der Basis eines rekurrenten neuronalen Netzes (engl.: recurrent neural network, RNN) mittels bidirektionalem langem Kurzzeitgedächtnis (engl.: bidirectional long short-term memory, BLSTM) erfasst werden.

Manche Ausführungsformen integrieren z.B., um mit spärlich bezeichneten Daten umzugehen, vorübergehende Aufmerksamkeitsmechanismen, um sich zur Klassifikation auf bestimmte Regionen des Signals zu konzentrieren [23]. Das Problem von Rauschbezeichnungen bei der Klassifikation ist besonders relevant für Anwendungen für selektives Hören, bei denen die Klassenbezeichnungen so verschieden sein können, dass qualitativ hochwertige Bezeichnungen sehr kostspielig sind [24]. Geräuschbezeichnungen bei Vorgängen zur Schallereignisklassifikation wurden in [25] thematisiert, wo geräuschrobuste Verlustfunktionen auf der Basis der kategorischen Kreuzentropie sowie Möglichkeiten, sowohl Daten mit Geräuschbezeichnungen als auch manuell bezeichnete Daten auszuwerten, präsentiert werden. Gleichermaßen präsentiert [26] ein System für Audioereignisklassifikation auf der Basis eines faltenden neuronalen Netzes (engl.: convolutional neural network, CNN), das einen Verifizierungsschritt für Geräuschbezeichnungen auf der Basis eines Vorhersagekonsenses des CNN bei mehreren Segmenten des Testbeispiels einschließt.

Einige Ausführungsformen realisieren beispielsweise, Schallereignisse simultan zu erfassen und zu verorten. So führen manche Ausführungsformen, wie in [27] die Erfassung als einen Klassifikationsvorgang mit mehreren Bezeichnungen durch, und der Standort wird als die 3D-Koordinaten der Ankunftsrichtung (DOA) für jedes Schallereignis gegeben.

Manche Ausführungsformen nutzen Konzepte der Stimmaktivitätserfassung und an Sprechererkennung/-identifizierung für SH. Stimmaktivitätserfassung wurde in geräuschvollen Umgebungen unter Verwendung von entrauschenden Autoencodern [28], rekurrenten neuronalen Netzen [29] oder als Ende-zu-Ende-System unter Verwendung unverarbeiteter Signalverläufe (raw waveforms) [30] thematisiert. Für Sprechererkennungsanwendungen wurden viele Systeme in der Literatur vorgeschlagen [31], wobei sich die überwiegende Mehrheit darauf konzentriert, die Robustheit gegenüber verschiedenen Bedingungen zu erhöhen, beispielsweise mit Datenvergrößerung oder mit verbesserten Einbettungen, die die Erkennung erleichtern [32]-[34]. So nutzen einige der Ausführungsformen diese Konzepte.

Weitere Ausführungsformen nutzen Konzepte zur Klassifikation von Musikinstrumenten für die Schallereigniserfassung. Die Klassifikation von Musikinstrumenten sowohl in monophonen als auch polyphonen Umgebungen wurde in der Literatur behandelt [35], [36]. In [35] wird das vorherrschende Instrument in 3-sekündigen Audiosegmenten unter 11 Instrumentenklassen klassifiziert, wobei einige Aggregationsverfahren vorgeschlagen werden. Gleichermaßen schlägt [37] eine Methode für die Erfassung der Aktivität von Musikinstrumenten vor, die in der Lage ist, Instrumente in einer feineren zeitlichen Auflösung von 1 Sek zu erfassen. Ein beträchtliches Maß an Forschung wurde in dem Bereich der Singstimmenanalyse betrieben. Insbesondere wurden Methoden wie [38] für den Vorgang des Erfassens von Segmenten in einer Audioaufnahme vorgeschlagen, bei denen die Singstimme aktiv ist. Manche Ausführungsformen nutzen diese Konzepte.

Manche der Ausführungsformen nutzen zur Schallquellenlokalisation (engl.: Sound Source Localization) eines der nachfolgend diskutieren Konzepte. So hängt Schallquellenlokalisation eng mit dem Problem des Quellenzählens zusammen, da die Anzahl von Schallquellen in der auditiven Szene üblicherweise in Anwendungen aus dem echten Leben nicht bekannt ist. Einige Systeme arbeiten unter der Annahme, dass die Anzahl von Quellen in der Szene bekannt ist. Dies ist beispielsweise bei dem in [39] präsentierten Modell der Fall, das Histogramme aktiver Intensitätsvektoren verwendet, um die Quellen zu verorten. [40] schlägt aus einer kontrollierten Perspektive einen CNNbasierten Algorithmus vor, um die DOA mehrerer Sprecher in der auditiven Szene unter Verwendung von Phasenkarten als Eingabedarstellungen zu schätzen. Im Gegensatz dazu schätzen mehrere Arbeiten in der Literatur gemeinsam die Anzahl von Quellen in der Szene und deren Standortinformationen. Dies ist bei [41] der Fall, wo ein System für eine Lokalisation mehrerer Sprecher in geräuschvollen und hallenden Umgebungen vorgeschlagen wird. Das System verwendet ein komplexwertiges Gaußsches Mischmodell (engl.: Gaussian Mixture Model, GMM), um sowohl die Anzahl von Quellen als auch deren Standortinformationen zu schätzen. Die dort beschriebenen Konzepte werden von manchen der Ausführungsformen eingesetzt.

Algorithmen zur Schallquellenlokalisation können rechentechnisch anspruchsvoll sein, da sie oft ein Abtasten eines großen Raums um die auditive Szene herum umfassen [42]. Um rechentechnische Anforderungen hinsichtlich der Lokalisationsalgorithmen zu reduzieren, nutzen einige der Ausführungsformen Konzepte, die den Suchraum durch den Einsatz von Clustering-Algorithmen [43] oder durch Durchführen von Mehrfachauflösungssuchen [42] bezüglich bewährter Verfahren wie diejenigen auf der Basis der Steered-Response-Phasentransformation (steered response power phase transform, SRP-PHAT) reduzieren. Andere Verfahren stellen Anforderungen an die Dünnbesetztheit der Matrix und setzen voraus, dass nur eine Schallquelle in einem gegebenen Zeit-Frequenz-Bereich vorherrschend ist [44]. Unlängst wurde in [45] ein Ende-zu-Ende-System für Azimuterfassung direkt aus den unverarbeiteten Signalverläufen vorgeschlagen. Einige der Ausführungsformen nutzen diese Konzepte.

Einige der Ausführungsformen nutzen Konzepte zur Schallquellentrennung (engl.: Sound Source Separation, SSS), die nachfolgend beschrieben werden, insbesondere aus den Bereichen Sprachtrennung und Musiktrennung.

Insbesondere setzen einige Ausführungsformen Konzepte der sprecherunabhängigen Trennung ein. Dort erfolgt eine Trennung ohne jegliche Vorabinformationen über die Sprecher in der Szene [46]. Einige Ausführungsformen werten auch den räumlichen Standort des Sprechers aus, um eine Trennung durchzuführen [47].

In Anbetracht der Wichtigkeit rechentechnischer Leistung bei Anwendungen für selektives Hören ist die Forschung mit dem konkreten Ziel, geringe Latenz zu erzielen, besonders relevant. Es wurden einige Arbeiten vorgeschlagen, um Sprachtrennung mit geringer Latenz (< 10 ms) mit geringfügigen verfügbaren Lerndaten durchzuführen [48]. Um durch Framing-Analyse im Frequenzbereich verursachte Verzögerungen zu vermeiden, gehen einige Systeme das Trennungsproblem dahin gehend an, dass sie vorsichtig im Zeitbereich anzuwendende Filter entwerfen [49]. Andere Systeme erzielen eine Trennung mit geringer Latenz durch direktes Modellieren des Zeitbereichssignals unter Verwendung eines Codierer-Decodierer-Rahmens [50]. Im Gegensatz dazu versuchten einige Systeme, die Framing-Verzögerung bei Ansätzen der Frequenzbereichstrennung zu reduzieren [51]. Diese Konzepte werden von manchen der Ausführungsformen eingesetzt.

Manche Ausführungsformen setzen Konzepte zur Trennung von Musiktönen (engl.: music sound separation, MSS) ein, die eine Musikquelle aus einer Audioabmischung zu extrahieren [5], etwa Konzepte zur Trennung von Hauptinstrument und Begleitung [52]. Diese Algorithmen nehmen die herausstechenste Schallquelle in der Abmischung, unabhängig von ihrer Klassenbezeichnung, und versuchen, sie von der restlichen Begleitung zu trennen. Manchen Ausführungsformen nutzen Konzepte zur Singstimmentrennung [53]. In den meisten Fällen werden entweder bestimmte Quellenmodelle [54] oder datengesteuerte Modelle [55] dazu verwendet, die Charakteristika der Singstimme einzufangen. Obwohl Systeme wie das in [55] vorgeschlagene nicht explizit eine Klassifikations- oder eine Erfassungsstufe einschließen, um eine Trennung zu erzielen, ermöglicht es das datengesteuerte Wesen dieser Ansätze diesen Systemen, implizit zu lernen, die Singstimme mit einer gewissen Genauigkeit vor der Trennung zu erfassen. Eine andere Klasse von Algorithmen im Musikbereich versucht, eine Trennung durchzuführen, indem lediglich der Standort der Quellen verwendet wird [4], ohne zu versuchen, die Quelle vor der Trennung zu klassifizieren oder zu erfassen.

Einige der Ausführungsformen setzen Antischall (ANC)-Konzepte ein, z.B. die Aktive Lärmkompensation (ANC). ANC-Systeme zielen hauptsächlich darauf ab, Hintergrundrauschen für Benutzer von Kopfhörern zu reduzieren, indem ein Antischallsignal eingesetzt wird, um sie aufzuheben [11]. ANC kann als Sonderfall von SH betrachtet werden und steht vor einer gleichermaßen strengen Anforderung [14]. Einige Arbeiten konzentrierten sich auf Antischall in spezifischen Umgebungen wie Automobilinnenräume [56] oder betriebliche Szenarios [57]. Die Arbeit in [56] analysiert die Aufhebung verschiedener Arten von Geräuschen wie Straßenlärm und Motorengeräusche und erfordert einheitliche Systeme, die in der Lage sind, mit verschiedenen Arten von Geräuschen umzugehen. Einige Arbeiten konzentrierten sich auf das Entwickeln von ANC-Systemen zur Aufhebung von Geräuschen über spezifischen räumlichen Regionen. In [58] wird ANC über einer räumlichen Region unter Verwendung von Kugelflächenfunktionen als Basisfunktionen zur Darstellung des Geräuschfelds thematisiert. Einige der Ausführungsformen setzen die hier beschriebenen Konzepte ein.

Manche der Ausführungsformen nutzen Konzepte zur Schallquellenverbesserung (engl.: Sound Source Enhancement).

Im Zusammenhang mit Sprachverbesserung ist eine der häufigsten Anwendungen die Sprachverbesserung, die durch Rauschen beeinträchtigt sind. Viele Arbeiten konzentrierten auf Phasenverarbeitung der Einkanalsprachverbesserung [8]. Aus der Perspektive des Bereichs der tiefen neuronalen Netze wurde das Problem des Entrauschens von Sprachäußerungen in [59] mit entrauschenden Decodierern (engl.: denoising decoders) thematisiert, in [60] als ein nicht lineares Regressionsproblem zwischen sauberen und verrauschten Sprachäußerungen unter Verwendung eines tiefen neuronales Netzes (engl.: deep neural network, DNN) und in [61] als ein Ende-zu-Ende-System unter Verwendung erzeugender gegnerischer Netzwerke (engl.: Generative Adversarial Networks, GAN). In vielen Fällen wird die Sprachverbesserung als eine Vorstufe für Systeme zur automatischen Spracherkennung (engl.: automatic speech recognition, ASR) verwendet, wie es in [62] der Fall ist, wo Sprachverbesserung mit einem LSTM RNN angegangen wird. Sprachverbesserung wird oft zusammen mit Ansätzen der Schallquellentrennung ausgeführt, bei der der Grundgedanke darin besteht, zunächst die Sprachäußerung zu extrahieren, um anschließend Verbesserungstechniken auf das isolierte Sprachsignal anzuwenden [6]. Die hier beschriebenen Konzepte werden von manchen der Ausführungsformen eingesetzt.

Quellenverbesserung im Zusammenhang mit Musik bezieht sich meist auf Anwendungen zum Herstellen von Musikremixen. Im Gegensatz zu Sprachverbesserung, bei der die Annahme oft darin besteht, dass die Sprachäußerung nur durch Rauschquellen beeinträchtigt wird, nehmen Musikanwendungen meistens an, dass andere Schallquellen (Musikinstrumente) simultan mit der zu verbessernden Quelle spielen. Daher sind Musik-Remix-Anwendungen immer so bereitgestellt, dass ihnen eine Quellentrennungsanwendung vorausgeht. Beispielsweise wurden in [10] frühe Jazz-Aufnahmen geremixt, indem Techniken zur Trennung von Hauptinstrument und Begleitung sowie von harmonischen Instrumenten und Schlaginstrumenten angewandt wurden, um eine bessere Klangbalance in der Abmischung zu erzielen. Gleichermaßen untersuchte [63] die Verwendung verschiedener Algorithmen zur Singstimmentrennung, um die relative Lautstärke der Singstimme und der Begleitspur zu verändern, wodurch gezeigt wurde, dass eine Erhöhung von 6 dB durch Einführen geringfügiger, jedoch hörbarer Verzerrungen in die finale Abmischung möglich ist. In [64] untersuchen die Autoren Möglichkeiten, die Musikwahrnehmung für Benutzer von Cochlea-Implantaten zu verbessern, indem Techniken zur Schallquellentrennung angewandt werden, um neue Abmischungen zu erzielen. Die dort beschriebenen Konzepte werden von einigen der Ausführungsformen genutzt.

Eine der größten Herausforderungen bei Anwendungen für selektives Hören bezieht sich auf die strengen Anforderungen in Bezug auf die Verarbeitungszeit. Der komplette Verarbeitungsworkflow muss mit minimaler Verzögerung ausgeführt werden, um die Natürlichkeit und Qualitätswahrnehmung für den Benutzer zu erhalten. Die maximale akzeptable Latenz eines Systems hängt stark von der Anwendung und von der Komplexität der auditiven Szene ab. Zum Beispiel schlagen McPherson et al. 10 ms als akzeptablen Latenzbezug für interaktive Musikschnittstellen vor [12]. Für Musikaufführungen über ein Netzwerk berichten die Autoren in [13], dass Verzögerungen in dem Bereich zwischen 20-25 und 50-60 ms wahrnehmbar werden. Jedoch erfordern Antischall-Technologien/Technologien der Aktiven Lärmkompensation (active noise cancellation, ANC) für bessere Leistung ultrageringe Latenzverarbeitung. Bei diesen Systemen ist der Umfang akzeptabler Latenz sowohl frequenz- als auch dämpfungsabhängig, kann jedoch für eine etwa 5-dB-Dämpfung von Frequenzen unter 200 Hz bis zu 1 ms gering sein [14]. Eine abschließende Betrachtung hinsichtlich SH-Anwendungen bezieht sich auf die Qualitätswahrnehmung der modifizierten auditiven Szene. Ein erheblicher Arbeitsaufwand wurde bezüglich der Methodiken für eine zuverlässige Bewertung der Audioqualität bei verschiedenen Anwendungen betrieben [15], [16], [17]. Jedoch besteht die Herausforderung bei SH darin, das klare Abwägen zwischen Verarbeitungskomplexität und Qualitätswahrnehmung zu handhaben. Manche der Ausführungsformen nutzen die dort beschriebenen Konzepte.

In manchen Ausführungsformen werden Konzepte für Zählen und Lokalisation in [41], für Lokalisation und Erfassung in [27], für Trennung und Klassifikation in [65] und für Trennung und Zählen in [66], wie dort beschrieben, eingesetzt.

Manche Ausführungsformen setzen Konzepte zur Verbesserung der Robustheit derzeitiger Verfahren für maschinelles Hören ein, wie in [25], [26], [32], [34] beschrieben, die neue aufstrebende Richtungen die Bereichsanpassung [67] und das Lernen auf der Basis von mit mehreren Geräten aufgenommenen Datensätzen umfassen [68].

Einige der Ausführungsformen setzen Konzepte zur Verbesserung der rechentechnischen Effizienz des maschinellen Hörens, wie in [48] beschrieben, ein, oder in [30], [45], [50], [61] beschriebene Konzepte, die in der Lage sind, mit unverarbeiteten Signalverläufen umzugehen.

Manche Ausführungsformen realisieren ein einheitliches Optimierungsschema, das kombiniert erfasst/klassifiziert/lokalisiert und trennt/verbessert, um Schallquellen in der Szene selektiv modifizieren zu können, wobei voneinander unabhängige Erfassungs-, Trennungs-, Lokalisations-, Klassifikations- und Verbesserungsverfahren zuverlässig sind und die für SH erforderliche Robustheit und Flexibilität bereitstellen.

Einige Ausführungsformen sind für Echtzeitverarbeitung geeignet, wobei eine gute Abwägung zwischen algorithmischer Komplexität und Leistung erfolgt.

Manche Ausführungsformen kombinieren ANC und maschinelles Hören. Es wird beispielsweise zunächst die auditive Szene klassifiziert und dann selektiv ANC angewendet.

Nachfolgend werden weitere Ausführungsformen bereitgestellt.

Um eine reale Hörumgebung mit virtuellen Audioobjekten anzureichern, müssen die Transferfunktionen von jeder der Positionen der Audioobjekte zu jeder der Positionen der Zuhörer in einem Raum hinreichend genau bekannt sein.

Die Transferfunktionen bilden die Eigenschaften der Soundquellen ab, sowie den Direktschall zwischen den Objekten und dem Nutzer, sowie aller Reflektionen, die in dem Raum auftreten. Um korrekte räumliche Audioreproduktionen für die Raumakustik eines realen Raums sicherzustellen, in dem sich der Zuhörer gegenwärtig befindet, müssen die Transferfunktionen zudem die raumakustischen Eigenschaften des Zuhörraums hinreichend genau abbilden.

In Audiosystemen, die für die Darstellung von individuellen Audioobjekten an unterschiedlichen Positionen in dem Raum geeignet sind, liegt, bei Vorhandensein einer großen Anzahl von Audioobjekten, die Herausforderung in der geeigneten Erkennung und Separierung der individuellen Audioobjekte. Des Weiteren überlappen die Audiosignale der Objekte in der Aufnahmeposition oder in der Hörposition des Raums. Sowohl die Raumakustiken als auch die Überlagerung der Audiosignale ändern sich, wenn sich die Objekte und/oder die Hörpositionen im Raum ändern.

Die Schätzung von Raumakustik-Parametern muss bei relativer Bewegung hinreichend schnell erfolgen. Dabei ist eine geringe Latenz der Schätzung wichtiger als eine hohe Genauigkeit. Ändern sich Position von Quelle und Empfänger nicht (statischer Fall) ist dagegen eine hohe Genauigkeit nötig. Im vorgeschlagenen System werden Raumakustik-Parameter, sowie die Raumgeometrie und die Hörerposition aus einem Strom von Audiosignalen geschätzt bzw. extrahiert. Dabei werden die Audiosignale in einer realen Umgebung aufgenommen, in der die Quelle(n) und der/die Empfänger sich in beliebige Richtungen bewegen können, und in der die Quelle(n) und/oder der/die Empfänger ihre Orientierung auf beliebige Weise ändern können.

Der Audiosignalstrom kann das Ergebnis eines beliebigen Mikrofon-Setups sein, das ein oder mehrere Mikrofone umfasst. Die Ströme werden in eine Signalverarbeitungsstufe zur Vorverarbeitung und/oder weiteren Analyse eingespeist. Danach wird die Ausgabe in eine Merkmalsextraktionsstufe eingespeist. Diese Stufe schätzt die Raumakustik-Parameter, z.B. T60 (Nachhallzeit), DRR (Direkt-zu-Nachhall Verhältnis) und andere.

Ein zweiter Datenstrom wird von einem 6DoF ("six degree of freedom" - Freiheitsgrade: je drei Dimensionen für Position im Raum und Blickrichtung) Sensor erzeugt, der die Orientierung und Position des Mikrofon-Setups aufzeichnet. Der Positions-Datenstrom wird in eine 6DoF Signalverarbeitungsstufe zur Vorverarbeitung oder weiteren Analyse eingespeist.

Die Ausgabe der 6DoF Signalverarbeitung, der Audio-Merkmalsextraktionsstufe und der vorverarbeiteten Mikrofonströme wird in einen Maschinen-Lern-Block eingespeist, indem der Hörraum (Größe, Geometrie, reflektierende Oberflächen) und die Position des Mikrofonfeldes in dem Raum geschätzt werden. Zusätzlich wird ein Nutzer-Verhaltens-Modell angewandt, um eine robustere Schätzung zu ermöglichen. Dieses Modell berücksichtigt Einschränkungen der menschlichen Bewegungen (z.B. kontinuierliche Bewegung, Geschwindigkeit, u.a.), sowie die Wahrscheinlichkeitsverteilung von unterschiedlichen Arten von Bewegungen.

Manche der Ausführungsformen realisieren eine blinde Schätzung von Raumakustik-Parametern durch Verwendung beliebiger Mikrofonanordnungen und durch Hinzufügen von Positions- und Posen-Information des Nutzers, sowie durch Analyse der Daten mit Verfahren des maschinellen Lernens.

Systeme gemäß Ausführungsformen können beispielsweise für akustische angereicherte Realität (AAR) verwendet werden. Dort muss eine virtuelle Raumimpulsantwort aus den geschätzten Parametern synthetisiert werden.

Manche Ausführungsformen beinhalten die Entfernung des Nachhalls aus den aufgenommenen Signalen. Beispiele für solche Ausführungsformen sind Hörhilfen für Normal- und Schwerhörige. Dabei kann dem Eingangssignal des Mikrofon-Setups der Nachhall durch die Hilfe der geschätzten Parameter entfernt werden.

Eine weitere Anwendung liegt in der räumlichen Synthese von Audioszenen, die in einem anderen Raum als dem aktuellen Hörraum erzeugt wurden. Zu diesem Zweck erfolgt eine Anpassung der raumakustischen Parametern, welche Bestandteil in der Audioszenen sind, an die raumakustischen Parameter des Hörraums.

In den Fällen einer binauralen Synthese werden hierzu die verfügbaren BRIRs an die raumakustischen Parameter des Hörraums angepasst.

In einer Ausführungsform wird eine Vorrichtung zur Bestimmung von ein oder mehreren Raumakustik-Parametern bereitgestellt.

Die Vorrichtung ist ausgebildet, Mikrofon-Daten zu erhalten, die ein oder mehrere Mikrofonsignale umfassen.

Ferner ist die Vorrichtung ausgebildet, Nachverfolgungsdaten betreffend eine Position und/oder eine Orientierung eines Nutzers zu erhalten.

Darüber hinaus ist die Vorrichtung ausgebildet, die ein oder mehreren Raumakustik-Parameter abhängig von den Mikrofon-Daten und abhängig von den Nachverfolgungsdaten zu bestimmen.

Gemäß einer Ausführungsform kann die Vorrichtung z.B. ausgebildet sein, maschinelles Lernen einzusetzen, um abhängig von den Mikrofon-Daten und abhängig von den Nachverfolgungsdaten die ein oder mehreren Raumakustik-Parameter zu bestimmen.

In einer Ausführungsform kann die Vorrichtung z.B. ausgebildet sein, maschinelles Lernen dadurch einzusetzen, dass die Vorrichtung ausgebildet sein kann, ein neuronales Netz einzusetzen.

Gemäß einer Ausführungsform kann die Vorrichtung z.B. ausgebildet sein, zum maschinellen Lernen, Cloud-basierte Verarbeitung einzusetzen.

In einer Ausführungsform können die ein oder mehreren Raumakustik-Parameter z.B. eine Nachhallzeit umfassen.

Gemäß einer Ausführungsform können die ein oder mehreren Raumakustik-Parameter z.B. ein Direkt-zu-Nachhall Verhältnis umfassen.

In einer Ausführungsform können die Nachverfolgungsdaten, um die Position des Nutzers zu bezeichnen, z.B. eine x-Koordinate, eine y-Koordinate und eine z-Koordinate umfassen.

Gemäß einer Ausführungsform können die Nachverfolgungsdaten, um die Orientierung des Nutzers zu bezeichnen, z.B. eine Pitch-Koordinate, eine Yaw-Koordinate und eine Roll-Koordinate umfassen.

In einer Ausführungsform kann die Vorrichtung z.B. ausgebildet sein, die ein oder mehreren Mikrofonsignale aus einer Zeitdomäne in eine Frequenzdomäne zu transformieren, wobei die Vorrichtung z.B. ausgebildet sein kann, ein oder mehrere Merkmale der ein oder mehreren Mikrofonsignale in der Frequenzdomäne zu extrahieren, und wobei die Vorrichtung z.B. ausgebildet sein kann, die ein oder mehreren Raumakustik-Parameter abhängig von den ein oder mehreren Merkmalen zu bestimmen.

Gemäß einer Ausführungsform kann die Vorrichtung z.B. ausgebildet sein, zum Extrahieren der ein oder mehreren Merkmale Cloud-basierte Verarbeitung einzusetzen.

In einer Ausführungsform kann die Vorrichtung z.B. eine Mikrofonanordnung von mehreren Mikrofonen umfassen, um die mehreren Mikrofonsignale aufzunehmen.

Gemäß einer Ausführungsform kann die Mikrofonanordnung z.B. ausgebildet sein, von einem Nutzer am Körper getragen zu werden.

In einer Ausführungsform kann das oben beschriebene System der Fig. 1 des Weiteren z.B. eine oben beschriebene Vorrichtung zur Bestimmung von ein oder mehreren Raumakustik-Parametern umfassen.

Gemäß einer Ausführungsform kann der Signalanteil-Modifizierer 140 z.B. ausgebildet sein, die Veränderung des Audioquellen-Signalanteils der wenigstens einen Audioquelle der ein oder mehreren Audioquellen abhängig von wenigstens einem der ein oder mehreren Raumakustik-Parametern durchzuführen; und/oder der Signalgenerator 150 kann z.B. ausgebildet sein, die Erzeugung von wenigstens einer der Mehrzahl von binauralen Raumimpulsantworten für jede Audioquelle der ein oder mehreren Audioquellen abhängig von der wenigstens einem der ein oder mehreren Raumakustik-Parametern durchzuführen.

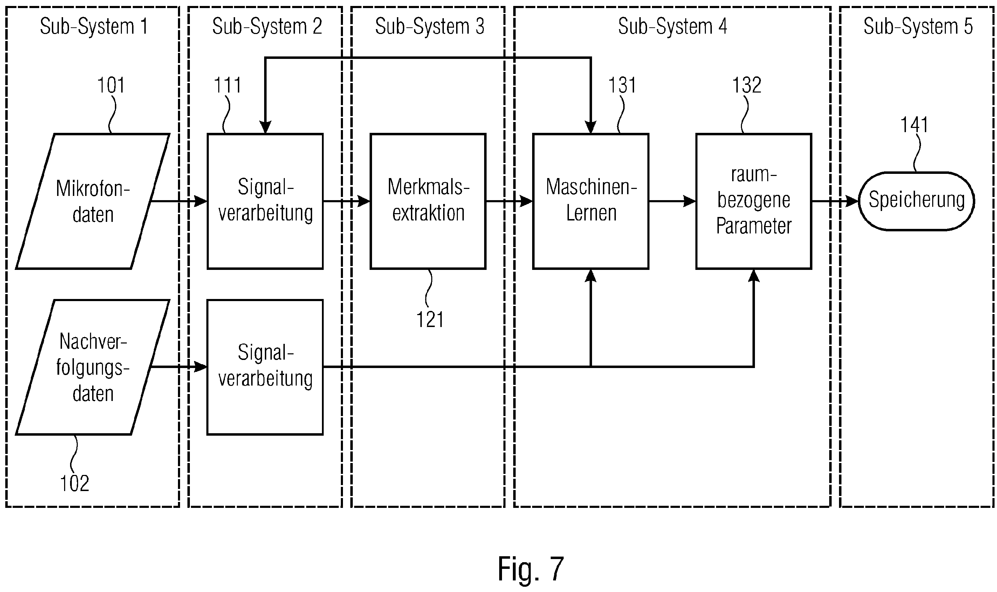

Fig. 7 zeigt ein System gemäß einer Ausführungsform, das fünf Sub-Systeme (Sub-System 1 - 5) umfasst.

Sub-System 1 umfasst ein Mikrofon-Setup von einem, zwei oder mehreren einzelnen Mikrofonen, die zu einem Mikrofonfeld kombiniert werden können, falls mehr als ein Mikrofon verfügbar ist. Die Positionierung und die relative Anordnung des Mikrofons/der Mikrofone zueinander können beliebig sein. Die Mikrofonanordnung kann Teil eines Geräts sein, das von dem Benutzer getragen wird, oder kann ein separates Gerät sein, das in dem interessierenden Raum positioniert wird.

Des Weiteren umfasst Sub-System 1 ein Nachverfolgungs-Gerät, um Nachverfolgungsdaten betreffend eine Position und/oder eine Orientierung eines Nutzers zu erhalten. Bei den Nachverfolgungsdaten betreffend die Position und/oder die Orientierung des Nutzers kann es sich zum Beispiel um translatorische Positionen des Nutzers und der Kopf-Pose des Nutzers in dem Raum zu messen. Bis zu 6DoF (sechs Freiheitsgrade, z.B., x-Koordinate, y-Koordinate, z-Koordinate, Pitch-Winkel, Yaw-Winkel, Roll-Winkel) können gemessen werden.

Das Nachverfolgungs-Gerät kann dabei z.B. ausgebildet sein, die Nachverfolgungsdaten zu messen. Das Nachverfolgungs-Gerät kann an dem Kopf eines Benutzers positioniert werden, oder es kann in verschiedene Unter-Geräte aufgeteilt werden, um die benötigten DoFs zu messen, und es kann an dem Benutzer oder nicht am Benutzer platziert werden.

Sub-System 1 stellt also eine Eingangsschnittstelle dar, die eine Mikrofonsignal-Eingangsschnittstelle 101 und eine Positionsinformations-Eingangsschnittstelle 102 umfasst.

Sub-System 2 umfasst Signalverarbeitung für das aufgenommene Mikrofonsignal/die aufgenommenen Mikrofonsignale. Dies umfasst Frequenztransformationen und/oder Zeit-Domänen-basierte Verarbeitung. Des Weiteren umfasst dies Verfahren zum Kombinieren verschiedener Mikrofonsignale, um Feldverarbeitung zu realisieren. Ein Zurückführen von dem Subsystem 4 ist möglich, um Parameter der Signalverarbeitung im Subsystem 2 anzupassen. Der Signalverarbeitungsblock des Mikrofonsignals/der Mikrofonsignale kann Teil des Geräts sein, in dem das Mikrofon/die Mikrofone eingebaut sind, oder er kann Teil eines getrennten Geräts sein. Er kann auch Teil einer Cloud-basierten Verarbeitung sein.

Des Weiteren umfasst Sub-System 2 Signalverarbeitung für die aufgezeichneten Nachverfolgungs-Daten. Dies umfasst Frequenztransformationen und/oder Zeit-Domänenbasiertes Verarbeiten. Des Weiteren umfasst sie Verfahren, um die technische Qualität der Signale zu verbessern, indem Rauschunterdrückung, Glättung, Interpolation und Extrapolation eingesetzt werden. Sie umfasst zudem Verfahren, um Informationen höherer Ebenen abzuleiten. Dies umfasst Geschwindigkeiten, Beschleunigungen, Weg-Richtungen, Ruhezeiten, Bewegungs-Bereiche, Bewegungspfade. Des Weiteren umfasst dies die Vorhersage eines Bewegungspfads der nahen Zukunft und einer Geschwindigkeit der nahen Zukunft. Der Signalverarbeitungs-Block der Nachverfolgungs-Signale kann Teil des Nachverfolgungs-Geräts sein, oder er kann Teil eines separaten Geräts sein. Er kann auch Teil einer Cloud-basierten Verarbeitung sein.

Sub-System 3 umfasst die Extraktion von Merkmalen des verarbeiteten Mikrofons/der verarbeiteten Mikrofone.

Der Merkmalsextraktions-Block kann Teil des tragbaren Geräts des Nutzers sein, oder er kann Teil eines separaten Geräts sein. Er kann auch Teil einer Cloud-basierten Verarbeitung sein.

Sub-Systeme 2 und 3 realisieren mit ihren Modulen 111 und 121 zusammen beispielsweise den Detektor 110, den Audiotyp-Klassifikator 130 und den Signalanteil-Modifizierer 140. Beispielsweise kann Sub-System 3, Modul 121 das Ergebnis einer Audiotyp-Klassifikation an Sub-System 2, Modul 111 übergeben (zurückkoppeln). Sub-System 2, Modul 112 realisiert beispielsweise einen Positionsbestimmer 120. Ferner können einer Ausführungsform die Sub-Systeme 2 und 3 auch den Signalgenerator 150 realisieren, indem z.B. Sub-System 2, Modul 111 die binauralen Raumimpulsantworten erzeugt und die Lautsprechersignale generiert.

Sub-System 4 umfasst Verfahren und Algorithmen, um raumakustische Parameter unter Verwendung des verarbeiteten Mikrofonsignals/der verarbeiteten Mikrofonsignale, der extrahierten Merkmale des Mikrofonsignals/der Mikrofonsignale und die verarbeiteten Nachverfolgungs-Daten zu schätzen. Die Ausgabe dieses Blocks sind die raumakustischen Parameter als Ruhedaten und eine Steuerung und Änderung der Parameter der Mikrofon-Signalverarbeitung im Subsystem 2. Der Maschinen-Lern-Block 131 kann Teil des Geräts des Nutzers sein oder er kann Teil eines separaten Geräts sein. Er kann auch Teil einer Cloud-basierten Verarbeitung sein.

Des Weiteren umfasst Sub-System 4 eine Nachverarbeitung der raumakustischen Ruhedaten-Parameter (z.B. in Block 132). Dies umfasst eine Detektion von Ausreißern, eine Kombination von einzelnen Parametern zu einem neuen Parameter, Glättung, Extrapolation, Interpolation und Plausibilitätsprüfung. Dieser Block bekommt auch Informationen vom Subsystem 2. Dies umfasst Positionen der nahen Zukunft des Nutzers in dem Raum, um akustische Parameter der nahen Zukunft zu schätzen. Dieser Block kann Teil des Geräts des Nutzers sein oder er kann Teil eines separaten Geräts sein. Er kann auch Teil einer Cloud-basierten Verarbeitung sein.

Sub-System 5 umfasst die Speicherung und Allokation der raumakustischen Parameter für Downstream-Systeme (z.B. in Speicher 141). Die Allokation der Parameter kann just-intime realisiert werden, und/oder der Zeitverlauf kann gespeichert werden. Die Speicherung kann in dem Gerät, das sich am Nutzer oder nahe dem Nutzer befindet, vorgenommen werden, oder in einem Cloud-basierten System vorgenommen werden.

Im Folgenden werden Anwendungsfälle für Ausführungsbeispiele der Erfindung beschrieben.

Ein Anwendungsfall eines Ausführungsbeispiels ist Home Entertainment und betrifft Nutzer in heimischer Umgebung.

Beispielsweise möchte sich ein Benutzer auf bestimmte Wiedergabegräte wie zum Beispiel TV, Radio, PC, Tablet konzentrieren und andere Störquellen (von Geräten anderer Nutzer oder Kindern, Baulärm, Straßenlärm) ausblenden. Der Benutzer befindet sich dabei in der Nähe des bevorzugten Wiedergabegeräts und wählt das Gerät bzw. dessen Position aus. Unabhängig von der Position des Benutzers wir das ausgewählte Gerät bzw. die Schallquellenpositionen akustisch hervorgehoben bis der Nutzer seine Auswahl aufhebt.

Z. B. begibt sich der Nutzer begibt sich in Nähe der Zielschallquelle. Der Nutzer wählt über ein geeignetes Interface Zielschallquelle aus, und das Hearable passt auf Basis der Nutzerposition, Nutzerblickrichtung sowie der Zielschalquelle die Audiowiedergabe entsprechend an, um die Zielschallquelle auch bei Störgeräuschen gut verstehen zu können.

Alternativ begibt sich der Nutzer in die Nähe einer besonders störenden Schallquelle. Der Nutzer wählt über ein geeignetes Interface diese Störschallquelle aus, und das Hearable (Hörgerät) passt auf Basis der Nutzerposition, Nutzerblickrichtung sowie der Störschallquelle die Audiowiedergabe entsprechend an, um die Störschallquelle explizit auszublenden.

Ein weiterer Anwendungsfall eines weiteren Ausführungsbeispiels ist eine Cocktailparty, bei der sich ein Nutzer zwischen mehreren Sprechern befindet.

Ein Benutzer möchte sich beispielsweise bei Anwesenheit vieler Sprecher auf einen (oder mehrere) konzentrieren sowie andere Störquellen ausblenden bzw. dämpfen. Die Steuerung des Hearables darf in diesem Anwendungsfall nur wenig aktive Interaktion vom Nutzer verlangen. Optional wäre eine Steuerung der Stärke der Selektivität anhand von Biosignalen oder erkennbaren Indikatoren für Konversationsschwierigkeiten (Häufige Nachfragen, Fremdsprachen, starke Dialekte).

Beispielsweise sind die Sprecher zufällig verteilt und bewegen sich relativ zum Hörer. Außerdem gibt es regelmäßige Sprechpausen, neue Sprecher kommen hinzu, andere Sprecher entfernen sich. Störgeräusche wie zum Beispiel Musik sind unter Umständen vergleichsweise laut. Der ausgewählte Sprecher wird akustisch hervorgehoben und auch nach Sprechpausen, Änderung seiner Position oder Pose wieder erkannt.

Z.B. erkennt ein Hearable einen Sprecher im Umfeld des Nutzer. Der Benutzer kann durch eine geeignete Steuerungsmöglichkeit (z.B. Blickrichtung, Aufmerksamkeitssteuerung) bevorzugte Sprecher auswählen. Das Hearable passt entsprechend der Nutzerblickrichtung sowie der gewählten Zielschalquelle die Audiowiedergabe an, um die Zielschallquelle auch bei Störgeräuschen gut verstehen zu können.

Alternativ wird der Nutzer von einem (bisher) nicht bevorzugten Sprecher direkt angesprochen muss dieser zumindest hörbar sein um eine natürliche Kommunikation zu gewährleisten.

Ein anderer Anwendungsfall eines anderen Ausführungsbeispiels ist im Automobil, bei dem sich ein Nutzer in seinem (oder in einem) KFZ befindet. Der Benutzer möchte während der Fahrt seine akustische Aufmerksamkeit aktiv auf bestimmte Wiedergabegeräte wie zum Beispiel Navigationsgeräte, Radio oder Gesprächspartner richten um diese neben den Störgeräuschen (Wind, Motor, Mitfahrer) besser verstehen zu können.

Beispielsweise befinden sich der Benutzer und die Zielschallquellen auf festen Positionen innerhalb des KFZs. Der Nutzer ist zum Bezugssystem zwar statisch, aber das KFZ selber bewegt sich. Ein angepasste Tracking Lösung ist daher notwendig. Die ausgewählte Schallquellenpositionen wird akustisch hervorgehoben bis der Nutzer seine Auswahl aufhebt oder bis Warnsignale die Funktion des Geräts aussetzen.

Z.B. begibt ein Nutzer sich ins KFZ und Umgebung wird von Gerät erkannt. Der Benutzer kann durch eine geeignete Steuerungsmöglichkeit (z.B. Spracherkennung) zwischen den Zielschallquellen wechseln, und das Hearable passt entsprechend der Nutzerblickrichtung sowie der gewählten Zielschalquelle die Audiowiedergabe an, um die Zielschallquelle auch bei Störgeräuschen gut verstehen zu können.

Alternativ unterbrechen z.B. verkehrsrelevante Warnsignale den normalen Ablauf und heben Auswahl des Nutzers auf. Dann wird ein Neustart des normalen Ablaufs durchgeführt.

Ein anderer Anwendungsfall eines weiteren Ausführungsbeispiels ist Live-Musik und betrifft einen Besucher einer Live-Musik Veranstaltung. Beispielsweise möchte der Besucher eines Konzerts oder Live-Musikdarbietungen mit Hilfe des Hearables den Fokus auf die Darbietung erhöhen und störende Mithörer auszublenden. Zusätzlich kann das Audiosignal selber optimiert werden um Beispielsweise eine ungünstige Hörposition oder Raumakustik auszugleichen.

Z.B. befindet sich der Besucher zwischen vielen Störquellen, aber die Darbietungen sind meist verhältnismäßig laut. Die Zielschallquellen befinden sich auf festen Positionen oder zumindest in einem definiertem Bereich, jedoch kann der Benutzer sehr mobil sein (z.B. Tanz). Die ausgewählte Schallquellenpositionen wird akustisch hervorgehoben bis der Nutzer seine Auswahl aufhebt oder bis Warnsignale die Funktion des Geräts aussetzen.

Beispielsweise wählt der Benutzer den Bühnenbereich oder den/die Musiker als Zielschallquelle(n) aus Benutzer kann durch eine geeignete Steuerungsmöglichkeit die Position der Bühne/der Musiker definieren, und das Hearable passt entsprechend der Nutzerblickrichtung sowie der gewählten Zielschalquelle die Audiowiedergabe an, um die Zielschallquelle auch bei Störgeräuschen gut verstehen zu können.

Alternativ können z.B. Warninformationen (z.B. Evakuierung, Drohendes Gewitter bei Freiluftveranstaltungen) und Warnsignale den normalen Ablauf unterbrechen und heben Auswahl des Nutzers auf. Danach kommt es zum Neustart des normalen Ablaufs.

Ein weiterer Anwendungsfall eines anderen Ausführungsbeispiels ist sind Großveranstaltungen und betreffen Besucher bei Großveranstaltungen. So kann bei Großveranstaltungen (z.B. Fußball-, Eishockeystadion, große Konzerthalle etc.) ein Hearable genutzt werden, um die Stimme von Familienangehörigen und Freunden hervorzuheben, die andernfalls im Lärm der Menschenmassen untergehen würden.

Beispielsweise findet eine Großveranstaltung in einem Stadion oder einer großen Konzerthalle statt, wo sehr viele Besucher hingehen. Eine Gruppe (Familie, Freunde, Schulklasse) besucht die Veranstaltung und befindet sich vor oder im Veranstaltungsgelände, wo eine große Menschenmasse an Besuchern herumläuft. Ein oder mehrere Kinder verlieren den Blickkontakt zur Gruppe und rufen trotz großem Lärmpegel durch die Umgebungsgeräusche nach der Gruppe. Dann stellt der Benutzer die Stimmenerkennung ab, das und Hearable verstärkt die Stimme(n) nicht mehr.

Z.B. wählt eine Person aus der Gruppe am Hearable die Stimme des vermissten Kindes aus. Das Hearable lokalisiert die Stimme. Dann verstärkt das Hearable die Stimme, und der Benutzer kann das vermisste anhand der verstärkten Stimme (schneller) wiederfinden.

Alternative trägt das vermisste Kind z.B. auch ein Hearable und wählt die Stimme seiner Eltern aus. Das Hearable verstärkt die Stimme(n) der Eltern. Durch die Verstärkung kann das Kind dann seine Eltern lokalisieren. So kann das Kind zurück zu seinen Eltern laufen. Oder, alternativ trägt das vermisste Kind z.B. auch ein Hearable und wählt die Stimme seiner Eltern aus. Das Hearable ortet die Stimme(n) der Eltern, und das Hearable sagt die Entfernung zu den Stimmen durch. Das Kind kann seine Eltern so leichter wiederfinden. Optional ist eine Wiedergabe einer künstlichen Stimme aus dem Hearable für die Entfernungsdurchsage vorgesehen.

Beispielsweise ist eine Kopplung der Hearables für eine zielgerichtete Verstärkung der Stimme(n) vorgesehen und Stimmenprofile sind eingespeichert.

Ein weiterer Anwendungsfall eines weiteren Ausführungsbeispiels ist Freizeitsport und betrifft Freizeitsportier. So ist das Hören von Musik während dem Sport beliebt, aber birgt auch Gefahren. Warnsignale oder andere Verkehrsteilnehmer werden eventuell nicht gehört. Das Hearable kann neben der Musikwiedergabe, auf Warnsignale oder Zurufe reagieren und die Musikwiedergabe zeitweise unterbrechen. Ein weiterer Anwendungsfall in diesem Kontext ist der Sport in Kleingruppen. Die Hearables der Sportgruppe können verbunden werden um während des Sports eine gute Kommunikation untereinander zu gewährleisten während andere Störgeräusche unterdrückt werden.

Beispielsweise ist der Benutzer mobil und eventuelle Warnsignale sind überlagert von zahlreichreichen Störquellen. Problematisch ist, dass eventuell nicht alle Warnsignale den Benutzer betreffen (Weit entfernte Sirenen in der Stadt, Hupen auf der Straße) So setzt das Hearable die Musikwiedergabe automatisch aus und hebt das Warnsignal oder den Kommunikationspartner akustisch hervor bis der Nutzer seine Auswahl aufhebt. Anschließend wird die Musik normal weiter abgespielt.

Z.B. betreibt ein Nutzer Sport und hört Musik über Hearable. Den Nutzer betreffende Warnsignale oder Zurufe werden automatisch erkannt und das Hearable unterbricht die Musikwiedergabe. Dabei passt das Hearable die Audiowiedergabe an, um die Zielschallquelle\die akustische Umgebung gut verstehen zu können. Dann fährt das Hearable automatisch (z.B. nach Ende des Warnsignals) oder nach Wunsch des Nutzer mit der Musikwiedergabe fort.

Alternativ können Sportler einer Gruppe beispielsweise ihre Hearables verbinden. Die Spracheverständlichkeit zwischen den Gruppenmitgliedern wird optimiert und gleichzeitig werden andere Störgeräusche unterdrückt.

Ein anderer Anwendungsfall eines anderen Ausführungsbeispiels ist Schnarchunterdrückung und betrifft alle vom Schnarchen gestörte Schlafsuchende. Personen, deren Partner beispielsweise schnarchen, werden in ihrer nächtlichen Ruhe gestört und haben Probleme beim Schlafen. Das Hearable verschafft Abhilfe, indem es die Schnarchgeräusche unterdrückt und so die nächtliche Ruhe sichert und für häuslichen Frieden sorgt. Gleichzeitig lässt das Hearable andere Geräusche (Babygeschrei, Alarmsirene etc.) durch, damit der Benutzer akustisch nicht völlig von der Außenwelt abgeschottet ist. Eine Schnarcherkennung ist z.B. vorgesehen.

Beispielsweise hat der Benutzer hat Schlafprobleme durch Schnarchgeräusche. Durch Nutzung des Hearables kann der Benutzer dann wieder besser schlafen, was stressmindernd wirkt.

Z.B. trägt der Benutzer trägt das Hearable während des Schlafens. Er schaltet das Hearable auf Schlafmodus, der alle Schnarchgeräusche unterdrückt. Nach dem Schlafen schaltet er das Hearable wieder aus.

Alternativ lassen sich andere Geräusche wie Baulärm, Rasenmäherlärm o.ä. während des Schlafens unterdrücken.

Ein anderer Anwendungsfall eines weiteren Ausführungsbeispiels ist ein Diagnosegrät für Nutzer im Alltag. Das Hearable zeichnet die Präferenzen (z.B.: welche Schallquellen, welche Verstärkung/Dämpfung werden gewählt) auf und erstellt über die Nutzungsdauer ein Profil mit Tendenzen. Aus diesen Daten können Rückschlüsse auf Veränderungen bzgl. des Hörvermögens geschlossen werden. Ziel ist die frühzeitige Erkennung von Hörverlust.

Beispielsweise trägt der Benutzer das Gerät im Alltag bzw. bei den genannten Use-Cases über mehrere Monate oder Jahre. Das Hearable erstellt Analysen auf Basis der gewählten Einstellung und gibt Warnungen und Empfehlungen an den Nutzer.

Z.B. trägt der Nutzer das Hearable über einen langen Zeitraum (Monate bis Jahre). Das Gerät erstellt selbständlich Analysen auf Basis der Hörpräferenzen, und das Gerät gibt Empfehlung und Warnungen bei einsetzendem Hörverlust.

Ein weiterer Anwendungsfall eines anderen Ausführungsbeispiels ist ein Therapiegerät und betrifft Nutzer mit Hörschaden im Alltag. In der Rolle als Übergangsgerät zum Hörgerät werden potentielle Patienten frühzeitig versorgt und somit Demenz präventiv behandelt. Andere Möglichkeiten sind Einsatz als Konzentrationstrainer (z.B. Für ADHS), Behandlung von Tinnitus und Stressminderung.

Beispielsweise hat der Benutzer Hör-, oder Aufmerksamkeitsprobleme und nutzt das Hearable zeitweise/übergangsweise als Hörgerät. Je nach Hörproblem wird dieses durch das Hearable gemindert beispielsweise durch: Verstärkung aller Signale (Schwerhörigkeit), Hohe Selektivität für bevorzugte Schallquellen (Aufmerksamkeitsdefizite), Wiedergabe von Thereapiegeräuschen (Tinitusbehandlung).

Nutzer wählt selbständig, oder auf Rat eines Arztes, eine Therapieform aus und trifft die bevorzugten Einstellungen, und das Hearable führt die gewählte Therapie aus.

Alternativ erkennt das Hearable erkennt Hörprobleme aus UC-PRO1, und das Hearable passt Wiedergabe auf Basis der erkannten Probleme automatisch an und informiert den Nutzer.

Ein weiterer Anwendungsfall eines weiteren Ausführungsbeispiels ist Arbeit im öffentlichen Bereich und betrifft Arbeitnehmer im öffentlichen Bereich. Arbeitnehmer im öffentlichen Bereich (Krankenhäuser, Kinderärzte, Flughafenschalter, Erzieher, Gastronomie, Serviceschalter etc.), die während der Arbeit einem hohen Lärmpegel ausgesetzt sind, tragen ein Hearable, um die Sprache einer oder nur weniger Personen zur besseren Kommunikation und zum besseren Arbeitsschutz durch z.B. Stressminderung hervorzuheben.

Beispielsweise sind Arbeitnehmer in ihrem Arbeitsumfeld einem hohen Lärmpegel ausgesetzt und müssen sich trotz des Hintergrundlärms mit Kunden, Patienten oder Arbeitskollegen unterhalten ohne, dass sie in ruhigere Umgebungen ausweichen können. Krankenhauspersonal ist einem hohen Lärmpegel durch Geräusche und dem Piepen medizinischer Geräte (oder anderem Arbeitslärm) ausgesetzt und muss sich trotzdem mit Patienten oder Kollegen verständigen können. Kinderärzte sowie Erzieher arbeiten inmitten von Kinderlärm ggf. -geschrei und müssen mit den Eltern reden können. Am Flughafenschalter hat das Personal Schwierigkeiten die Fluggäste bei einem hohen Lärmpegel in der Flughafenhalle zu verstehen. In der Gastronomie haben es die Keller schwer im Lärmpegel bei gut besuchten Gaststätten die Bestellwünsche ihrer Gäste zu hören. Dann stellt der Benutzer z.B. die Stimmenselektion ab, und das Hearable verstärkt die Stimme(n) nicht mehr.

Z.B. schaltet eine Person das aufgesetzte Hearable ein. Der Benutzer stellt das Hearable auf Stimmenselektion nahgelegener Stimmen ein, und das Hearable verstärkt die nächstgelegene Stimme bzw. wenige Stimmen im näheren Umfeld und unterdrückt gleichzeitig Hintergrundgeräusche. Der Benutzer versteht die relevante/n Stimme/n besser.

Alternativ stellt eine Person das Hearable auf Dauergeräuschunterdrückung. Der Benutzer schaltet die Funktion ein, auftretende Stimmen zu erkennen und dann zu verstärken. So kann der Benutzer bei geringerem Lärmpegel weiterarbeiten. Bei direkter Ansprache aus einem Umkreis von x Metern verstärkt das Hearable dann die Stimme/n. Der Benutzer kann sich so bei geringem Lärmpegel mit der anderen Person/den anderen Personen unterhalten. Nach der Unterhaltung schaltet das Hearable zurück in den alleinigen Lärmminderungsmodus, und nach der Arbeit schaltet der Benutzer das Hearable wieder aus.

Ein anderer Anwendungsfall eines anderen Ausführungsbeispiels ist Personentransport und betrifft Nutzer in einem KFZ zum Personentransport. Beispielsweise möchte ein Benutzer und Fahrer eines Personentransporters während der Fahrt möglichst wenig durch die beförderten Personen abgelenkt werden. Die Mitfahrer sind zwar die Hauptstörquelle, aber es ist zeitweise auch eine Kommunkation mit Ihnen notwendig.

Z.B. befinden sich ein Benutzer bzw. Fahrer und die Störquellen sich auf festen Positionen innerhalb des KFZs. Der Nutzer ist zum Bezugssystem zwar statisch, aber das KFZ selber bewegt sich. Eine angepasste Tracking Lösung ist daher notwendig. So werden im Normalfall Geräusche und Gespräche der Mitfahrer akustisch unterdrückt, außer es soll eine Kommunikation stattfinden.

Beispielsweise unterdrückt das Hearable standardmäßig Störgeräusche der Insassen. Der Benutzer kann durch eine geeignete Steuerungsmöglichkeit (z.B. Spracherkennung, Taste im KFZ) die Unterdrückung manuell aufheben. Dabei passt das Hearable die Audiowiedergabe entsprechend der Auswahl an.

Alternativ erkennt das Hearable, dass ein Mitfahrer den Fahrer aktiv anspricht und deaktiviert die Geräuschunterdrückung zeitweise.

Ein anderer Anwendungsfall eines weiteren Ausführungsbeispiels ist Schule und Ausbildung und betrifft Lehrer und Schüler im Unterricht. In einem Beispiel hat das Hearable zwei Rollen wobei die Funktionen der Geräte teilweise gekoppelt sind. Das Gerät des LehrersNortagenden unterdrückt Störgeräusche und verstärkt Sprache/Fragen aus den Reihen der Schüler. Weiterhin kann über das Lehrergerät die Hearables der Zuhörer gesteuert werden. So können besonders wichtige Inhalte hervorgehoben werden ohne lauter sprechen zu müssen. Die Schüler können ihr Hearable einstellen um die Lehrer besser verstehen zu können und störende Mitschüler auszublenden.

Beispielsweise befinden Lehrer und Schüler sich in definierten Bereichen in geschlossenen Räumen (dies ist der Regelfall). Sind alle Geräte miteinander gekoppelt, dann sind die relativen Positionen austauschbar was wiederum die Quellentrennung vereinfacht. Die ausgewählte Schallquelle wird akustisch hervorgehoben bis der Nutzer (Lehrer/Schüler) seine Auswahl aufhebt oder bis Warnsignale die Funktion des Geräts aussetzen.

Z.B. präsentiert ein Lehrer bzw. Vortragender einen Inhalt und das Gerät unterdrückt Störgeräusche. Der Lehrer möchte eine Frage eines Schülers hören und ändert Fokus des Hearables auf den Fragenden (automatisch oder durch geeignete Steuerungsmöglichkeit) Nach der Kommunikation werden wieder alle Geräusche unterdrückt. Zudem kann vorgesehen sein, dass z.B. ein Schüler, der sich von Mitschülern gestört fühlt, diese akustisch ausblendet. Ferner kann z.B. ein Schüler, der weit weg vom Lehrer sitzt, dessen Stimme verstärken.

Alternativ können Lehrer- und Schülergerät z.B. gekoppelt sein. Durch das Lehrergerät kann die Selektivität der Schülergeräte zeitweise gesteuert werden. Bei besonders wichtigen Inhalten ändert der Lehrer die Selektivität der Schülergeräte um seine Stimme zu verstärken.

Ein weiterer Anwendungsfall eines anderen Ausführungsbeispiels ist das Militär und betrifft Soldaten. Die verbale Kommunikation zwischen Soldaten im Einsatz erfolgt zum Einen über Funkgeräte und zum Anderen über Zurufe und direktes Ansprechen. Funk wird meistens verwendet, wenn größere Distanzen überbrückt werden müssen und wenn zwischen verschieden Einheiten und Teilgruppen kommuniziert werden soll. Es kommt oft eine festgelegte Funk-Etiquette zur Anwendung. Zurufe und direktes Ansprechen erfolgt meistens zur Kommunikation innerhalb eines Trupps oder Gruppe. Während des Einsatzes von Soldaten kann es zu erschwerten akustischen Bedingungen kommen (bspw. schreiende Menschen, Waffenlärm, Unwetter), welche beide Kommunikationswege beeinträchtigen können. Zur Ausrüstung eines Soldaten gehört oft eine Funkgarnitur mit Ohrhörer. Diese erfüllen neben dem Zweck der Audiowiedergabe auch Schutzfunktionen vor zu hohen Schalldruckpegeln. Diese Geräte sind oft mit Mikrofonen ausgestattet, um Umweltsignale an die Ohren des Trägers zu bringen. Eine aktive Geräuschunterdrückung ist ebenfalls Bestandteil derartiger Systeme. Eine Erweiterung des Funktionsumfanges ermöglicht ein Zurufen und direktes Ansprechen von Soldaten in einer geräuschbehafteten Umgebung durch intelligente Dämpfung der Störgeräusche und eine selektive Hervorhebung von Sprache mit einer richtungsgetreuen Wiedergabe. Hierzu müssen die relativen Positionen der Soldaten im Raum/Gelände bekannt sein. Weiterhin müssen Sprachsignale und Störgeräusche räumlich und inhaltlich voneinander getrennt werden. Das System muss auch mit hohen SNR-Pegeln von leisem Flüstern bis hin zu Schreien und Explosionsgeräuschen zurechtkommen. Die Vorteile eines derartiges Systems sind: verbale Kommunikation zwischen Soldaten in störgeräuschbehafteter Umgebung, Beibehaltung eines Gehörschutzes, Verzichtbarkeit auf Funk-Etiquette, Abhörsicherheit (da keine Funklösung).

Beispielsweise kann das Zurufen und direkte Ansprechen zwischen Soldaten im Einsatz durch Störgeräusche erschwert werden. Diese Problematik wird aktuell durch Funklösungen im Nahbereich und für größere Distanzen adressiert. Das neue System ermöglicht das Zurufen und direkte Ansprechen im Nahbereich durch eine intelligent und räumliche Hervorhebung des jeweiligen Sprechers bei gleichzeitiger Dämpfung der Umgebungsgeräusche.

Z.B. befindet sich der Soldat im Einsatz. Zurufe und Sprache wird automatisch erkannt und das System verstärkt diese bei gleichzeitiger Dämpfung der Nebengeräusche. Das System passt die räumliche Audiowiedergabe an, um die Zielschallquelle gut verstehen zu können.

Alternativ können dem System z.B. die sich in einer Gruppe befindlichen Soldaten bekannt sein. Nur Audiosignals von diesen Gruppenmitgliedern werden durchgelassen.

Ein weiterer Anwendungsfall eines weiteren Ausführungsbeispiels betrifft Sicherheitspersonal und Sicherheitsbeamte. So kann z.B. das Hearable bei unübersichtlichen Großveranstaltungen (Feiern, Proteste) zur präventiven Verbrechungserkennung eingesetzt werden. Die Selektivität des Hearables wird durch Stichworte gesteuert z.B. durch Hilfe-Rufe oder Aufrufe zur Gewalt. Das setzt eine inhaltliche Analyse des Audiosignals (z.B: Spracherkennung) voraus.

Beispielsweise ist der Sicherheitsbeamte von vielen lauten Schallquellen umgeben, wobei der Beamte und alle Schallquellen in Bewegung sein können. Ein Hilfe-Rufender ist unter normalen Hörbedingungen nicht oder nur leise hörbar (schlechter SNR). Die manuell oder automatische ausgewählte Schallquelle wird akustisch hervorgehoben bis der Nutzer die Auswahl aufhebt. Optional wird an der Position/Richtung der interessanten Schallquelle ein virtuelles Schallobjekt platziert um den Ort leicht finden zu können (z.B. für den Fall eines einmaligen Hilferufs).

Z.B. erkennt das Hearable Schallquellen mit potentiellen Gefahrenquellen. Ein Sicherheitsbeamter wählt welcher Schallquelle bzw. welchem Ereignis er nachgehen möchte (z.B. durch Auswahl auf einem Tablett). Das Hearable passt daraufhin die Audiowiedergabe an, um die Zielschallquelle auch bei Störgeräuschen gut verstehen und lokalisieren zu können.

Alternativ kann beispielsweise, wenn die Zielschallquelle verstummt ist, ein Ortungssignal in Richtung/Distanz der Quelle platziert werden.

Ein anderer Anwendungsfall eines anderen Ausführungsbeispiels ist Bühnenkommunikation und betrifft Musiker. Auf Bühnen können bei Proben oder Konzerten (z.B. Band, Orchester, Chor, Musical) auf Grund schwieriger akustischer Verhältnisse einzelne Instrumente(ngruppe) nicht gehört werden, die in anderen Umgebungen noch zu hören waren. Dadurch wird das Zusammenspiel beeinträchtigt, da wichtige (Begleit-)Stimmen nicht mehr wahrnehmbar sind. Das Hearable kann diese Stimmeln hervorheben und wieder hörbar machen und somit das Zusammenspiel der einzelnen Musiker verbessern bzw. sichern. Mit dem Einsatz könnte auch die Lärmbelastung einzelner Musiker verringert werden und damit Hörverluste vorbeugen, indem z.B. das Schlagzeug gedämpft wird, und gleichzeitig könnten die Musiker noch alles Wichtige hören.

Beispielsweise hört ein Musiker ohne Hearable auf der Bühne mindestens eine andere Stimme nicht mehr. Hier kann das Hearable dann eingesetzt werden. Wenn die Probe bzw. das Konzert zu Ende ist, setzt der Benutzer das Hearable nach dem Ausschalten wieder ab.

In einem Beispiel schaltet der Benutzer das Hearable ein. Er wählt ein oder mehrere gewünschte Musikinstrumente, die verstärkt werden soll, aus. Beim gemeinsamen Musizieren wird nun vom Hearable das ausgewählte Musikinstrument verstärkt und somit wieder hörbar gemacht. Nach dem Musizieren schaltet der Benutzer das Hearable wieder aus.

In einem alternativen Beispiel schaltet der Benutzer schaltet das Hearable ein. Er wählt das gewünschte Musikinstrument, dessen Lautstärke verringert werden soll, aus. 7. Beim gemeinsamen Musizieren wird nun vom Hearable das ausgewählte Musikinstrument in der Lautstärke verringert, sodass der Benutzer dieses nur noch auf gemäßigter Lautstärke hört.

In dem Hearable können beispielsweise Musikinstrumentprofile eingespeichert sein.

Ein anderer Anwendungsfall eines weiteren Ausführungsbeispiels ist Quellentrennung als Softwaremodul für Hörgeräte im Sinne des Ökosystems und betrifft Hörgerätehersteller bzw. Hörgerätenutzer. Hörgerätehersteller können Quellentrennung als Zusatztool für ihre Hörgeräte nutzen und den Kunden anbieten. So könnten auch Hörgeräte von der Entwicklung profitieren. Denkbar ist auch ein Lizenzmodell für andere Märkte/Geräte (Kopfhörer, Handys, etc.).

Beispielsweise haben es Hörgerätenutzer schwierig, bei einer komplexen auditiven Situation verschiedene Quellen voneinander zu trennen, um beispielsweise den Fokus auf einen bestimmten Sprecher zu legen. Um auch ohne externe Zusatzsysteme (z.B. Übertragung von Signalen von Mobilfunkanalagen über Bluetooth, gezielte Signalübertragung in Klassenräumen über eine FM-Anlage oder induktive Höranlagen) selektiv hören zu können, verwendet der Nutzer ein Hörgerät mit der Zusatzfunktion zum selektiven Hören. So kann er auch ohne Fremdzutun durch Quellentrennung einzelne Quellen fokussieren. Am Ende stellt der Benutzer die Zusatzfunktion aus und hört normal mit dem Hörgerät weiter.

Beispielsweise kauft sich ein Hörgerätenutzer ein neues Hörgerät mit integrierter Zusatzfunktion zum selektiven Hören. Der Benutzer stellt die Funktion zum selektiven Hören am Hörgerät ein. Dann wählt der Benutzer ein Profil aus (z.B. lauteste/nächstgelegene Quelle verstärken, Stimmenerkennung bestimmter Stimmen aus dem persönlichen Umfeld verstärken (wie beim UC-CE5 Großveranstaltungen). Das Hörgerät verstärkt entsprechend des eingestellten Profils die jeweilige Quelle/n und unterdrückt gleichzeitig bei Bedarf Hintergrundlärm, und der Hörgerätenutzer hört einzelne Quellen aus der komplexen auditiven Szene anstatt nur einen "Lärmbrei"/Wirrwarr aus akustischen Quellen.

Alternativ kauft sich der Hörgerätenutzer beispielsweise die Zusatzfunktion zum selektiven Hören als Software o.ä. für sein eigenes Hörgerät. Der Benutzer installiert die Zusatzfunktion für sein Hörgerät. Dann stellt der Benutzer stellt die Funktion zum selektiven Hören am Hörgerät ein. Der Benutzer wählt ein Profil aus (lauteste/nächstgelegene Quelle verstärken, Stimmenerkennung bestimmter Stimmen aus dem persönlichen Umfeld verstärken (wie beim UC-CE5 Großveranstaltungen), und das Hörgerät verstärkt entsprechend des eingestellten Profils die jeweilige Quelle/n und unterdrückt gleichzeitig bei Bedarf Hintergrundlärm. Dabei hört der Hörgerätenutzer einzelne Quellen aus der komplexen auditiven Szene anstatt nur einen "Lärmbrei"/Wirrwarr aus akustischen Quellen.

Das Hearable kann beispielsweise einspeicherbare Stimmenprofile vorsehen.

Ein weiterer Anwendungsfall eines anderen Ausführungsbeispiels ist Profisport und betrifft Sportler im Wettkampf. In Sportarten wie Biathlon, Triathlon, Radrennen, Marathon usw. sind Profisportler auf die Informationen ihrer Trainer oder die Kommunikation mit Teamkollegen angewiesen. Allerdings gibt es auch Situationen in denen Sie sich vor lauten Geräuschen (Schießen beim Biathlon, lautes Jubeln, Partytröten usw.) schützen wollen, um sich konzentrieren zu können. Das Hearable könnte für die jeweilige Sportart/Sportler angepasst werden, um eine vollautomatische Selektion relevanter Schallquellen (Erkennen bestimmter Stimmen, Lautheitslimitierung für typische Störgeräusche) zu ermöglichen.

Beispielsweise kann der Benutzer sehr mobil sein, und die Art der Störgeräusche ist abhängig von der Sportart. Aufgrund der intensiven sportlichen Belastung ist keine oder nur wenig aktive Steuerung des Geräts durch den Sportler möglich. Allerdings gibt es in den meisten Sportarten einen festgelegten Ablauf (Biathlon: Laufen, Schießen) und die wichtigen Gesprächspartner (Trainer, Teammitglieder) können vorher definiert werden Lärm wird dabei generell oder in bestimmten Phasen des Sports unterdrückt. Die Kommunikations zwischen Sportler und Teammitgliedern sowie Trainer wird stets hervorgehoben.

Z.B. nutzt der Sportler ein speziell auf die Sportart eingestelltes Hearable. Das Hearable unterdrückt vollautomatisch (voreingestellt) Störgeräusche, besonders in Situation wo bei der jeweiligen Sportart ein hohes Maß an Aufmerksamkeit gefordert ist. Der Weiteren hebt das Hearable vollautomatisch (voreingestellt) Trainer und Teammitglieder hervor, wenn diese in Hörreichweite sind.

Ein weiterer Anwendungsfall eines weiteren Ausführungsbeispiels ist Gehörbildung und betrifft Musikschüler- und Studenten, professionelle Musiker, Amateurmusiker. Für Musikproben (z.B. im Orchester, in einer Band, im Ensemble, im Musikunterricht) wird ein Hearable gezielt genutzt, um einzelne Stimmen herausgefiltert mitverfolgen zu können. Vor allem zu Beginn von Proben ist es hilfreich sich fertige Aufnahmen der Stücke anzuhören und die eigene Stimme mitzuverfolgen. Je nach Komposition sind die Stimmen im Hintergrund nicht gut herauszuhören, da man nur die vordergründigen Stimmen hört. Mit dem Hearable könnte man dann eine Stimme seiner Wahl anhand des Instrumentes o.ä. hervorheben, um sie gezielter üben zu können.

(Angehende) Musikstudenten können das Hearable auch nutzen ihre Fähigkeit zur Gehörbildung zu trainieren, um sich gezielt auf Aufnahmeprüfungen vorzubereiten, indem Schritt für Schritt einzelne Hervorhebungen minimiert werden, bis sie am Ende ohne Hilfe die einzelnen Stimmen aus komplexen Stücken zu extrahieren.

Eine weitere mögliche Anwendung stellt Karaoke da, wenn z.B. kein Singstar o.ä. in der Nähe ist. Dann kann man nach Belieben aus einem Musikstück die Gesangsstimme(n) unterdrücken, um für das Karaokesingen nur die Instrumentalversion zu hören.

Beispielsweise fängt ein Musiker an, eine Stimme aus einem Musikstück neu zu lernen. Er hört sich die Aufnahme zu dem Musikstück über eine CD-Anlage oder einem anderen Wiedergabemedium an. Ist der Benutzer fertig mit Üben, schaltet er das Hearable dann wieder aus.

In einem Beispiel schaltet der Benutzer das Hearable ein. Er wählt das gewünschte Musikinstrument, das verstärkt werden soll, aus. Beim Anhören des Musikstücks verstärkt das Hearable die Stimme/n des Musikinstruments, regelt die Lautstärke der restlichen Musikinstrumente herunter und der Benutzer kann so die eigene Stimme besser mitverfolgen

In einem alternativen Beispiel schaltet der Benutzer das Hearable ein. Er wählt das gewünschte Musikinstrument, das unterdrückt werden soll, aus. Beim Anhören des Musikstücks werden die Stimme/n des ausgewählten Musikstücks unterdrückt, sodass nur die restlichen Stimmen zu hören sind. Der Benutzer kann dann die Stimme auf dem eigenen Instrument mit den anderen Stimmen üben, ohne von der Stimme aus der Aufnahme abgelenkt zu werden.

In den Beispielen kann das Hearable eingespeicherte Musikinstrumentprofile vorsehen.

Ein anderer Anwendungsfall eines anderen Ausführungsbeispiels ist Arbeitssicherheit und betrifft Arbeiter in lauter Umgebung. Arbeiter in lauter Umgebung zum Beispiel in Maschinenhallen oder auf Baustellen müssen sich vor Lärm schützen, aber auch Warnsignale wahrnehmen können sowie mit Mitarbeiter kommunizieren können.

Beispielsweise befindet sich der Benutzer in einer sehr lauten Umgebung und die Zielschallquellen (Warnsignale, Mitarbeiter) sind unter Umständen deutlich leiser als die Störsignale. Der Benuter kann mobil sein, aber die Störgeräusche ist meist ortsstabil. Lärm wird wie bei einem Gehörschutz dauerhaft gesenkt und das Hearable hebt vollautomisch Warnsignal hervor. Kommunikation mit Mitarbeiter wird durch Verstärkung von Sprecherquellen gewährleistet

Z.B. geht der Benutzer seiner Arbeit nach und nutzt Hearable als Gehörschutz. Warnsignale (z.B. Feueralarm) werden akustisch hervorgehoben, und der Benutzer unterbricht ggf. seine Arbeit.

Alternativ geht der Benutzer z.B. seiner Arbeit nach und nutzt Hearable als Gehörschutz. Wenn der Bedarf noch Kommunikation mit Mitarbeiter besteht, wird mit Hilfe geeigneter Schnittstellen (hier z.B.: Blicksteuerung) der Kommunikationspartner gewählt und akustisch hervorgehoben

Ein anderer Anwendungsfall eines weiteren Ausführungsbeispiels ist Quellentrennung als Softwaremodul für Live-Übersetzer und betrifft Nutzer eines Live-Übersetzers. Live-Übersetzer übersetzen gesprochene Fremdsprachen in Echtzeit und können von einem vorgeschalteten Softwaremodul zur Quellentrennung profitieren. Vor allem für den Fall, dass mehrere Sprecher anwesend sind, kann das Softwaremodul den Zielsprecher extrahieren und die Übersetzung damit potentiell verbessern.

Beispielsweise ist das Softwaremodul Bestandteil eines Live-Übersetzers (dediziertes Gerät oder Smartphone App). Nutzer kann Zielsprecher beispielsweise über Display des Geräts auswählen. Vorteilhaft ist, dass sich der Übersetzer und die Zielschallquelle für die Zeit der Übersetzung in der Regel nicht oder wenig bewegen. Die ausgewählte Schallquellenpositionen wird akustisch hervorgehoben und verbessert somit potentiell die Übersetzung.

Z.B. möchte ein Nutzer ein Gespräch in Fremdsprache führen oder einem Fremsprachler zuhören. Der Nutzer wählt Zielsprecher durch geeignetes Interface (z.B: GUI auf Display) und das Softwaremodul optimiert die Audioaufnahme für die weitere Verwendung im Übersetzer.

Ein weiterer Anwendungsfall eines anderen Ausführungsbeispiels ist Arbeitsschutz von Einsatzkräften und betrifft Feuerwehr, THW, ggf. Polizei, Rettungskräfte. Bei Einsatzkräften ist eine gute Kommunikation für eine erfolgreiche Einsatzbewältigung essentiell. Häufig ist es nicht möglich für die Einsatzkräfte einen Gehörschutz zu tragen trotz lautem Umgebungslärm, da dann keine Kommunikation untereinander möglich ist. Feuerwehrleute müssen beispielsweise trotz lauter Motorengeräusche Befehle exakt mitteilen und verstehen können, was zum Teil über Funkgeräte geschieht. Daher sind Einsatzkräfte einer hohen Lärmbelastung ausgesetzt, bei der die Gehörschutzverordnung nicht umsetzbar ist. Ein Hearable würde zum einen Gehörschutz für die Einsatzkräfte bieten und zum anderen die Kommunikation zwischen den Einsatzkräften weiterhin ermöglichen. Weitere Punkte sind, dass die Einsatzkräfte mit Hilfe des Hearables beim Tragen von Helmen/Schutzausrüstung akustisch nicht von der Umwelt abgekoppelt sind und somit besser helfen können. Sie können dann besser kommunizieren und auch Gefahren für sich selber besser einschätzen (z.B. hören, was für eine Art von Feuer vorliegt).

Beispielsweise ist der Benutzer hohem Umgebungslärm ausgesetzt und kann daher keinen Gehörschutz tragen und muss sich trotzdem mit anderen noch verständigen können. Er setzt das Hearable ein. Nachdem der Einsatz bzw. die Gefahrensituation vorbei ist, setzt der Benutzer kann das Hearable wieder ab.

Z.B. trägt der Benutzer das Hearable während eines Einsatzes. Er schaltet das Hearable ein. Das Hearable unterdrückt Umgebungslärm und verstärkt die Sprache von Kollegen und anderen nahegelegenen Sprechern (z.B. Brandopfern).

Alternativ trägt der Benutzer trägt das Hearable während eines Einsatzes. Er schaltet das Hearable ein, und das Hearable unterdrückt Umgebungslärm und verstärkt die Sprache von Kollegen übers Funkgerät.

Gegebenenfalls ist das Hearable besonders dafür ausgelegt, eine bauliche Eignung für Einsätze entsprechend einer Einsatzvorschrift zu erfüllen. Eventuelle weist das Hearable eine Schnittstelle zu einem Funkgerät auf.

Obwohl manche Aspekte im Zusammenhang mit einer Vorrichtung bzw. einem System beschrieben wurden, versteht es sich, dass diese Aspekte auch eine Beschreibung des entsprechenden Verfahrens darstellen, sodass ein Block oder ein Bauelement einer Vorrichtung bzw. eines Systems auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung bzw., Systems dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] V. Valimaki, A. Franck, J. Ramo, H. Gamper, and L. Savioja, "Assisted listening using a headset: Enhancing audio perception in real, augmented, and virtual environments," IEEE Signal Processing Magazine, Bd. 32, Nr. 2, S. 92-99, März 2015.
[2] K. Brandenburg, E. Cano, F. Klein, T. Köllmer, H. Lukashevich, A. Neidhardt, U. Sloma, and S. Werner, "Plausible augmentation of auditory scenes using dynamic binaural synthesis for personalized auditory realities," in Proc. of AES International Conference on Audio for Virtual and Augmented Reality, Aug 2018.
[3] S. Argentieri, P. Dans, and P. Soures, "A survey on sound source localization in robotics: From binaural to array processing methods," Computer Speech Language, Bd. 34, Nr. 1, S. 87-112, 2015.
[4] D. FitzGerald, A. Liutkus, and R. Badeau, "Projection-based demixing of spatial audio," IEEE/ACM Trans. on Audio, Speech, and Language Processing, Bd. 24, Nr. 9, S. 1560-1572, 2016.
[5] E. Cano, D. FitzGerald, A. Liutkus, M. D. Plumbley, and F. Stöter, "Musical source separation: An introduction," IEEE Signal Processing Magazine, Bd. 36, Nr. 1, S. 31-40, Jan 2019.
[6] S. Gannot, E. Vincent, S. Markovich-Golan, and A. Ozerov, "A consolidated perspective on multimicrophone speech enhancement and source separation," IEEE/ACM Transactions on Audio, Speech, and Language Processing, Bd. 25, Nr. 4, S. 692-730, April 2017.
[7] E. Cano, J. Nowak, and S. Grollmisch, "Exploring sound source separation for acoustic condition monitoring in industrial scenarios," in Proc. of 25th European Signal Processing Conference (EUSIPCO), Aug 2017, S. 2264-2268.
[8] T. Gerkmann, M. Krawczyk-Becker, and J. Le Roux, "Phase processing for single-channel speech enhancement: History and recent advances," IEEE Signal Processing Magazine, Bd. 32, Nr. 2, S. 55-66, März 2015.
[9] E. Vincent, T. Virtanen, and S. Gannot, Audio Source Separation and Speech Enhancement. Wiley, 2018.
[10] D. Matz, E. Cano, and J. Abeßer, "New sonorities for early jazz recordings using sound source separation and automatic mixing tools," in Proc. of the 16th International Society for Music Information Retrieval Conference. Malaga, Spain: ISMIR, Okt. 2015, S. 749-755.
[11] S. M. Kuo and D. R. Morgan, "Active noise control: a tutorial review," Proceedings of the IEEE, Bd. 87, Nr. 6, S. 943-973, Juni 1999.
[12] A. McPherson, R. Jack, and G. Moro, "Action-sound latency: Are our tools fast enough?" in Proceedings of the International Conference on New Interfaces for Musical Expression, Juli 2016.
[13] C. Rottondi, C. Chafe, C. Allocchio, and A. Sarti, "An overview on networked music performance technologies," IEEE Access, Bd. 4, S. 8823-8843, 2016.
[14] S. Liebich, J. Fabry, P. Jax, and P. Vary, "Signal processing challenges for active noise cancellation headphones," in Speech Communication; 13th ITG-Symposium, Okt 2018, S. 1-5.
[15] E. Cano, J. Liebetrau, D. Fitzgerald, and K. Brandenburg, "The dimensions of perceptual quality of sound source separation," in Proc. of IEEE International Conference on Acoustics, Speech and Signal Processing (ICASSP), April 2018, S. 601-605.
[16] P. M. Delgado and J. Herre, "Objective assessment of spatial audio quality using directional loudness maps," in Proc. of IEEE International Conference on Acoustics, Speech and Signal Processing (ICASSP), Mai 2019, S. 621-625.
[17] C. H. Taal, R. C. Hendriks, R. Heusdens, and J. Jensen, "An algorithm for intelligibility prediction of time-frequency weighted noisy speech," IEEE Transactions on Audio, Speech, and Language Processing, Bd. 19, Nr. 7, S. 2125-2136, Sep. 2011.
[18] M. D. Plumbley, C. Kroos, J. P. Bello, G. Richard, D. P. Ellis, and A. Mesaros, Proceedings of the Detection and Classification of Acoustic Scenes and Events 2018 Workshop (DCASE2018). Tampere University of Technology. Laboratory of Signal Processing, 2018.
[19] R. Serizel, N. Turpault, H. Eghbal-Zadeh, and A. Parag Shah, "Large- Scale Weakly Labeled Semi-Supervised Sound Event Detection in Domestic Environments," Juli 2018, submitted to DCASE2018 Workshop.
[20] L. JiaKai, "Mean teacher convolution system for dcase 2018 task 4," DCASE2018 Challenge, Tech. Rep., September 2018.
[21] G. Parascandolo, H. Huttunen, and T. Virtanen, "Recurrent neural networks for polyphonic sound event detection in real life recordings," in Proc. of IEEE International Conference on Acoustics, Speech and Signal Processing (ICASSP), März 2016, S. 6440-6444.
[22] E. C, Çakir and T. Virtanen, "End-to-end polyphonic sound event detection using convolutional recurrent neural networks with learned time-frequency representation input," in Proc. of International Joint Conference on Neural Networks (IJCNN), Juli 2018, S. 1-7.
[23] Y. Xu, Q. Kong, W. Wang, and M. D. Plumbley, "Large-Scale Weakly Supervised Audio Classification Using Gated Convolutional Neural Network," in Proceedings of the IEEE International Conference on Acoustics, Speech and Signal Processing (ICASSP), Calgary, AB, Canada, 2018, S. 121-125.
[24] B. Frenay and M. Verleysen, "Classification in the presence of label noise: A survey," IEEE Transactions on Neural Networks and Learning Systems, Bd. 25, Nr. 5, S. 845-869, Mai 2014.
[25] E. Fonseca, M. Plakal, D. P. W. Ellis, F. Font, X. Favory, and X. Serra, "Learning sound event classifiers from web audio with noisy labels," in Proceedings of IEEE International Conference on Acoustics, Speech and Signal Processing (ICASSP), Brighton, UK, 2019.
[26] M. Dorfer and G. Widmer, "Training general-purpose audio tagging networks with noisy labels and iterative self-verification," in Proceedings of the Detection and Classification of Acoustic Scenes and Events 2018 Workshop (DCASE2018), Surrey, UK, 2018.
[27] S. Adavanne, A. Politis, J. Nikunen, and T. Virtanen, "Sound event localization and detection of overlapping sources using convolutional recurrent neural networks," IEEE Journal of Selected Topics in Signal Processing, S. 1-1, 2018.
[28] Y. Jung, Y. Kim, Y. Choi, and H. Kim, "Joint learning using denoising variational autoencoders for voice activity detection," in Proc. of Interspeech, September 2018, S. 1210-1214.
[29] F. Eyben, F. Weninger, S. Squartini, and B. Schuller, "Real-life voice activity detection with LSTM recurrent neural networks and an application to hollywood movies," in Proc. of IEEE International Conference on Acoustics, Speech and Signal Processing, Mai 2013, S. 483-487.
[30] R. Zazo-Candil, T. N. Sainath, G. Simko, and C. Parada, "Feature learning with rawwaveform CLDNNs for voice activity detection," in Proc. of INTERSPEECH, 2016.
[31] M. McLaren, Y. Lei, and L. Ferrer, "Advances in deep neural network approaches to speaker recognition," in Proc. of IEEE International Conference on Acoustics, Speech and Signal Processing (ICASSP), April 2015, S. 4814-4818.
[32] D. Snyder, D. Garcia-Romero, G. Sell, D. Povey, and S. Khudanpur, "X-vectors: Robust DNN embeddings for speaker recognition," in Proc. of IEEE International Conference on Acoustics, Speech and Signal Processing (ICASSP), April 2018, S. 5329-5333.
[33] M. McLaren, D. Castán, M. K. Nandwana, L. Ferrer, and E. Yilmaz, "How to train your speaker embeddings extractor," in Odyssey, 2018.
[34] S. O. Sadjadi, J. W. Pelecanos, and S. Ganapathy, "The IBM speaker recognition system: Recent advances and error analysis," in Proc. of Interspeech, 2016, S. 3633-3637.
[35] Y. Han, J. Kim, and K. Lee, "Deep convolutional neural networks for predominant instrument recognition in polyphonic music," IEEE/ACM Transactions on Audio, Speech, and Language Processing, Bd. 25, Nr. 1, S. 208-221, Jan 2017.
[36] V. Lonstanlen and C.-E. Cella, "Deep convolutional networks on the pitch spiral for musical instrument recognition," in Proceedings of the 17th International Society for Music Information Retrieval Conference. New York, USA: ISMIR, 2016, S. 612-618.
[37] S. Gururani, C. Summers, and A. Lerch, "Instrument activity detection in polyphonic music using deep neural networks," in Proceedings of the 19th International Society for Music Information Retrieval Conference. Paris, France: ISMIR, Sep. 2018, S. 569-576.
[38] J. Schlütter and B. Lehner, "Zero mean convolutions for level-invariant singing voice detection," in Proceedings of the 19th International Society for Music Information Retrieval Conference. Paris, France: ISMIR, Sep. 2018, S. 321-326.
[39] S. Delikaris-Manias, D. Pavlidi, A. Mouchtaris, and V. Pulkki, "DOA estimation with histogram analysis of spatially constrained active intensity vectors," in Proc. of IEEE International Conference on Acoustics, Speech and Signal Processing (ICASSP), März 2017, S. 526-530.
[40] S. Chakrabarty and E. A. P. Habets, "Multi-speaker DOA estimation using deep convolutional networks trained with noise signals," IEEE Journal of Selected Topics in Signal Processing, Bd. 13, Nr. 1, S. 8- 21, März 2019.
[41] X. Li, L. Girin, R. Horaud, and S. Gannot, "Multiple-speaker localization based on direct-path features and likelihood maximization with spatial sparsity regularization," IEEE/ACM Transactions on Audio, Speech, and Language Processing, Bd. 25, Nr. 10, S. 1997-2012, Okt 2017.
[42] F. Grondin and F. Michaud, "Lightweight and optimized sound source localization and tracking methods for open and closed microphone array configurations," Robotics and Autonomous Systems, Bd. 113, S. 63 - 80, 2019.
[43] D. Yook, T. Lee, and Y. Cho, "Fast sound source localization using two-level search space clustering," IEEE Transactions on Cybernetics, Bd. 46, Nr. 1, S. 20-26, Jan 2016.
[44] D. Pavlidi, A. Griffin, M. Puigt, and A. Mouchtaris, "Real-time multiple sound source localization and counting using a circular microphone array," IEEE Transactions on Audio, Speech, and Language Processing, Bd. 21, Nr. 10, S. 2193-2206, Okt 2013.
[45] P. Vecchiotti, N. Ma, S. Squartini, and G. J. Brown, "End-to-end binaural sound localisation from the raw waveform," in Proc. of IEEE International Conference on Acoustics, Speech and Signal Processing (ICASSP), Mai 2019, S. 451-455.
[46] Y. Luo, Z. Chen, and N. Mesgarani, "Speaker-independent speech separation with deep attractor network," IEEE/ACM Transactions on Audio, Speech, and Language Processing, Bd. 26, Nr. 4, S. 787-796, April 2018.
[47] Z. Wang, J. Le Roux, and J. R. Hershey, "Multi-channel deep clustering: Discriminative spectral and spatial embeddings for speaker-independent speech separation," in Proc. of IEEE International Conference on Acoustics, Speech and Signal Processing (ICASSP), April 2018, S. 1-5.
[48] G. Naithani, T. Barker, G. Parascandolo, L. Bramsl 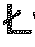 w, N. H. Pontoppidan, and T. Virtanen, "Low latency sound source separation using convolutional recurrent neural networks," in Proc. of IEEE Workshop on Applications of Signal Processing to Audio and Acoustics (WASPAA), Okt 2017, S. 71-75.
[49] M. Sunohara, C. Haruta, and N. Ono, "Low-latency real-time blind source separation for hearing aids based on time-domain implementation of online independent vector analysis with truncation of non-causal components," in Proc. of IEEE International Conference on Acoustics, Speech and Signal Processing (ICASSP), März 2017, S. 216-220.
[50] Y. Luo and N. Mesgarani, "TaSNet: Time-domain audio separation network for real-time, single-channel speech separation," in Proc. of IEEE International Conference on Acoustics, Speech and Signal Processing (ICASSP), April 2018, S. 696-700.
[51] J. Chua, G. Wang, and W. B. Kleijn, "Convolutive blind source separation with low latency," in Proc. of IEEE International Workshop on Acoustic Signal Enhancement (IWAENC), Sep. 2016, S. 1-5.
[52] Z. Rafii, A. Liutkus, F. Stöter, S. I. Mimilakis, D. FitzGerald, and B. Pardo, "An overview of lead and accompaniment separation in music," IEEE/ACM Transactions on Audio, Speech, and Language Processing, Bd. 26, Nr. 8, S. 1307-1335, Aug 2018.
[53] F.-R. Stöter, A. Liutkus, and N. Ito, "The 2018 signal separation evaluation campaign," in Latent Variable Analysis and Signal Separation, Y. Deville, S. Gannot, R. Mason, M. D. Plumbley, and D. Ward, Eds. Cham: Springer International Publishing, 2018, S. 293-305.
[54] J.-L. Durrieu, B. David, and G. Richard, "A musically motivated midlevel representation for pitch estimation and musical audio source separation," Selected Topics in Signal Processing, IEEE Journal of, Bd. 5, Nr. 6, S. 1180 -1191, Okt. 2011.
[55] S. Uhlich, M. Porcu, F. Giron, M. Enenkl, T. Kemp, N. Takahashi, and Y. Mitsufuji, "Improving music source separation based on deep neural networks through data augmentation and network blending," in Proc. of IEEE International Conference on Acoustics, Speech and Signal Processing (ICASSP), 2017.
[56] P. N. Samarasinghe, W. Zhang, and T. D. Abhayapala, "Recent advances in active noise control inside automobile cabins: Toward quieter cars," IEEE Signal Processing Magazine, Bd. 33, Nr. 6, S. 61-73, Nov 2016.
[57] G. S. Papini, R. L. Pinto, E. B. Medeiros, and F. B. Coelho, "Hybrid approach to noise control of industrial exhaust systems," Applied Acoustics, Bd. 125, S. 102 - 112, 2017.
[58] J. Zhang, T. D. Abhayapala, W. Zhang, P. N. Samarasinghe, and S. Jiang, "Active noise control over space: A wave domain approach," IEEE/ACM Transactions on Audio, Speech, and Language Processing, Bd. 26, Nr. 4, S. 774-786, April 2018.
[59] X. Lu, Y. Tsao, S. Matsuda, and C. Hori, "Speech enhancement based on deep denoising autoencoder," in Proc. of Interspeech, 2013.
[60] Y. Xu, J. Du, L. Dai, and C. Lee, "A regression approach to speech enhancement based on deep neural networks," IEEE/ACM Transactions on Audio, Speech, and Language Processing, Bd. 23, Nr. 1, S. 7-19, Jan 2015.
[61] S. Pascual, A. Bonafonte, and J. Serrà, "SEGAN: speech enhancement generative adversarial network," in Proc. of Interspeech, August 2017, S. 3642-3646.
[62] F. Weninger, H. Erdogan, S. Watanabe, E. Vincent, J. Le Roux, J. R. Hershey, and B. Schuller, "Speech enhancement with LSTM recurrent neural networks and its application to noise-robust ASR," in Latent Variable Analysis and Signal Separation, E. Vincent, A. Yeredor, Z. Koldovský, and P. Tichavský, Eds. Cham: Springer International Publishing, 2015, S. 91-99.
[63] H. Wierstorf, D. Ward, R. Mason, E. M. Grais, C. Hummersone, and M. D. Plumbley, "Perceptual evaluation of source separation for remixing music," in Proc. of Audio Engineering Society Convention 143, Okt 2017.
[64] J. Pons, J. Janer, T. Rode, and W. Nogueira, "Remixing music using source separation algorithms to improve the musical experience of cochlear implant users," The Journal of the Acoustical Society of America, Bd. 140, Nr. 6, S. 4338-4349, 2016.
[65] Q. Kong, Y. Xu, W. Wang, and M. D. Plumbley, "A joint separation-classification model for sound event detection of weakly labelled data," in Proceedings of IEEE International Conference on Acoustics, Speech and Signal Processing (ICASSP), März 2018.
[66] T. v. Neumann, K. Kinoshita, M. Delcroix, S. Araki, T. Nakatani, and R. Haeb-Umbach, "All-neural online source separation, counting, and diarization for meeting analysis," in Proc. of IEEE International Conference on Acoustics, Speech and Signal Processing (ICASSP), Mai 2019, S. 91-95.
[67] S. Gharib, K. Drossos, E. Cakir, D. Serdyuk, and T. Virtanen, "Unsupervised adversarial domain adaptation for acoustic scene classification," in Proceedings of the Detection and Classification of Acoustic Scenes and Events Workshop (DCASE), November 2018, S. 138-142.
[68] A. Mesaros, T. Heittola, and T. Virtanen, "A multi-device dataset for urban acoustic scene classification," in Proceedings of the Detection and Classification of Acoustic Scenes and Events Workshop, Surrey, UK, 2018.
[69] J. Abeßer, M. Götze, S. Kühnlenz, R. Gräfe, C. Kühn, T. Clauß, H. Lukashevich, "A Distributed Sensor Network for Monitoring Noise Level and Noise Sources in Urban Environments," in Proceedings of the 6th IEEE International Conference on Future Internet of Things and Cloud (FiCloud), Barcelona, Spain, pp. 318-324., 2018.
[70] T. Virtanen, M. D. Plumbley, D. Ellis (Eds.), "Computational Analysis of Sound Scenes and Events," Springer, 2018.
[71] J. Abeßer, S. loannis Mimilakis, R. Gräfe, H. Lukashevich, "Acoustic scene classification by combining autoencoder-based dimensionality reduction and convolutional neural net-works," in Proceedings of the 2nd DCASE Workshop on Detection and Classification of Acoustic Scenes and Events, Munich, Germany, 2017.
[72] A. Avni, J. Ahrens, M. Geierc, S. Spors, H. Wierstorf, B. Rafaely, "Spatial perception of sound fields recorded by spherical microphone arrays with varying spatial resolution," Journal of the Acoustic Society of America, 133(5), pp. 2711-2721, 2013.
[73] E. Cano, D. FitzGerald, K. Brandenburg, "Evaluation of quality of sound source separation algorithms: Human perception vs quantitative metrics," in Proceedings of the 24th European Signal Processing Conference (EUSIPCO), pp. 1758-1762, 2016.
[74] S. Marchand, "Audio scene transformation using informed source separation," The Journal of the Acoustical Society of America, 140(4), p. 3091, 2016.
[75] S. Grollmisch, J. Abeßer, J. Liebetrau, H. Lukashevich, "Sounding industry: Challenges and datasets for industrial sound analysis (ISA)," in Proceedings of the 27th European Signal Processing Conference (EUSIPCO) (eingereicht), A Coruna, Spain, 2019.
[76] J. Abeßer, M. Müller, "Fundamental frequency contour classification: A comparison between hand-crafted and CNN-based features, " in Proceedings of the 44th IEEE International Conference on Acoustics, Speech, and Signal Processing (ICASSP), 2019.
[77] J. Abeßer, S. Balke, M. Müller, "Improving bass saliency estimation using label propagation and transfer learning," in Proceedings of the 19th International Society for Music Information Retrieval Conference (ISMIR), Paris, France, pp. 306-312, 2018.
[78] C.-R. Nagar, J. Abeßer, S. Grollmisch, "Towards CNN-based acoustic modeling of seventh chords for recognition chord recognition," in Proceedings of the 16th Sound & Music Computing Conference (SMC) (eingereicht), Malaga, Spain, 2019.
[79] J. S. Gómez, J. Abeßer, E. Cano, "Jazz solo instrument classification with convolutional neural networks, source separation, and transfer learning", in Proceedings of the 19th International Society for Music Information Retrieval Conference (ISMIR), Paris, France, pp. 577- 584, 2018.
[80] J. R. Hershey, Z. Chen, J. Le Roux, S. Watanabe, "Deep clustering: Discriminative embeddings for segmentation and separation," in Proceedings of the IEEE International Conference on Acoustics, Speech and Signal Processing (ICASSP), pp. 31-35, 2016.
[81] E. Cano, G. Schuller, C. Dittmar, "Pitch-informed solo and accompaniment separation towards its use in music education applications", EURASIP Journal on Advances in Signal Processing, 2014:23, S. 1-19.
[82] S. I. Mimilakis, K. Drossos, J. F. Santos, G. Schuller, T. Virtanen, Y. Bengio, "Monaural Singing Voice Separation with Skip-Filtering Connections and Recurrent Inference of Time-Frequency Mask," in Proceedings of the IEEE International Conference on Acoustics, Speech, and Signal Processing (ICASSP), Calgary, Canada, S.721-725, 2018.
[83] J. F. Gemmeke, D. P. W. Ellis, D. Freedman, A. Jansen, W. Lawrence, R. C. Moore, M. Plakal, M. Ritter, "Audio Set: An ontology and human-labeled dataset for audio events," in Proceedings of the IEEE International Conference on Acoustics, Speech and Signal Processing (ICASSP), New Orleans, USA, 2017.
[84] Kleiner, M. "Acoustics and Audio Technology,". 3rd ed. USA: J. Ross Publishing, 2012.
[85] M. Dickreiter, V. Dittel, W. Hoeg, M. Wöhr, M. "Handbuch der Tonstudiotechnik," A. medienakademie (Eds). 7th ed. Vol. 1. München: K.G. Saur Verlag, 2008.
[86] F. Müller, M. Karau. "Transparant hearing," in: CHI ,02 Extended Abstracts on Human Factors in Computing Systems (CHI EA '02), Minneapolis, USA, pp. 730-731, April 2002.
[87] L. Vieira. "Super hearing: a study on virtual prototyping for hearables and hearing aids," Master Thesis, Aalborg University, 2018. Available: https://projekter.aau.dk/projekter/files/287515943/MasterThesis Luis.pdf.
[88] Sennheiser, "AMBEO Smart Headset," [Online]. Available: https:/Ide-de.sennheiser.com/finalstop [Accessed: March 1, 2019].
[89] Orosound "Tilde Earphones" [Online]. Available: https:/Iwww.orosound.com/tilde-earphones/ [Accessed; March 1, 2019].
[90] Brandenburg, K., Cano Ceron, E., Klein, F., Köllmer, T., Lukashevich, H., Neidhardt, A., Nowak, J., Sloma, U., und Werner, S., "Personalized auditory reality," in 44. Jahrestagung für Akustik (DAGA), Garching bei München, Deutsche Gesellschaft für Akustik (DEGA), 2018.
[91] US 2015 195641 A1, Anmeldetag: 6. Januar 2014; veröffentlicht 9. Juli 2015.

## Patentansprüche

1. System zur Unterstützung von selektivem Hören, wobei das System umfasst:
einen Detektor (110) zur Detektion eines Audioquellen-Signalanteils von ein oder mehreren Audioquellen unter Verwendung von wenigstens zwei empfangenen Mikrofonsignalen einer Hörumgebung,
einen Positionsbestimmer (120) zur Zuweisung von Positionsinformation zu jeder der ein oder mehreren Audioquellen,
einen Audiotyp-Klassifikator (130) zur Zuordnung eines Audiosignaltyps zu dem Audioquellen-Signalanteil jeder der ein oder mehreren Audioquellen,
einen Signalanteil-Modifizierer (140) zur Veränderung des Audioquellen-Signalanteils von wenigstens einer Audioquelle der ein oder mehreren Audioquellen abhängig von dem Audiosignaltyp des Audioquellen-Signalanteils der wenigstens einen Audioquelle, um einen modifizierten Audiosignalanteil der wenigstens einen Audioquelle zu erhalten, und
einen Signalgenerator (150) zur Erzeugung von einer Mehrzahl von binauralen Raumimpulsantworten für jede Audioquelle der ein oder mehreren Audioquellen abhängig von der Positionsinformation dieser Audioquelle und einer Orientierung eines Kopfes eines Nutzers, und zur Erzeugung von wenigstens zwei Lautsprechersignalen abhängig von der Mehrzahl der binauralen Raumimpulsantworten und abhängig von dem modifizierten Audiosignalanteil der wenigstens einen Audioquelle,
wobei der Signalanteil-Modifizierer (140) ausgebildet ist, die wenigstens eine Audioquelle, deren Audioquellen-Signalanteil modifiziert wird, abhängig von einem zuvor erlernten Benutzerszenario auszuwählen und abhängig von dem zuvor erlernten Benutzerszenario zu modifizieren, wobei zur Hörunterstützung erwünschter Schall lauter und unerwünschter Schall leiser wiedergegeben wird, um die Sprachverständlichkeit zu erhöhen.

2. System nach Anspruch 1,
wobei der Detektor (110) ausgebildet ist, den Audioquellen-Signalanteil der ein oder mehreren Audioquellen unter Verwendung von Deep Learning Modellen zu detektieren.

3. System nach Anspruch 1 oder 2,
wobei die Positionsbestimmer (120) ausgebildet ist, die zu jedem der ein oder mehreren Audioquellen die Positionsinformation abhängig von einem aufgenommenen Bild oder von einem aufgenommenen Video zu bestimmen.

4. System nach Anspruch 3,
wobei der Positionsbestimmer (120) ausgebildet ist, die zu jedem der ein oder mehreren Audioquellen die Positionsinformation abhängig von dem Video zu bestimmen, indem eine Lippenbewegung einer Person in dem Video detektiert wird und abhängig von der Lippenbewegung dem Audioquellen-Signalanteil eines der ein oder mehreren Audioquellen zugeordnet wird.

5. System nach einem der vorherigen Ansprüche,
wobei der Detektor (110) ausgebildet ist, ein oder mehrere akustische Eigenschaften der Hörumgebung abhängig von den wenigstens zwei empfangenen Mikrofonsignalen zu bestimmen.

6. System nach Anspruch 5,
wobei der Signalgenerator (150) ausgebildet ist, die Mehrzahl der binauralen Raumimpulsantworten abhängig von den ein oder mehreren akustischen Eigenschaften der Hörumgebung zu bestimmen.

7. System nach einem der vorherigen Ansprüche,
wobei das System eine Benutzeroberfläche (160) zur Auswahl des zuvor erlernten Benutzerszenarios aus einer Gruppe von zwei oder mehreren zuvor erlernten Benutzerszenarien umfasst.

8. System nach einem der vorherigen Ansprüche,
wobei der Detektor (110) und/oder der Positionsbestimmer (120) und/oder der Audiotyp-Klassifikator (130) und/oder der Signalanteil-Modifizierer (140) und/oder der Signalgenerator (150) ausgebildet ist, parallele Signalverarbeitung unter Verwendung einer Hough-Transformation oder unter Einsatz einer Mehrzahl von VLSI-Chips oder unter Einsatz einer Mehrzahl von Memristoren durchzuführen.

9. System nach einem der vorherigen Ansprüche,
wobei das System ein Hörgerät (170) umfasst, das als Hörhilfe für in ihrer Hörfähigkeit eingeschränkte und/oder hörgeschädigte Nutzer dient, wobei das Hörgerät (170) wenigstens zwei Lautsprecher (171, 172) zur Ausgabe der wenigstens zwei Lautsprechersignale umfasst.

10. System nach einem der Ansprüche 1 bis 8,
wobei das System wenigstens zwei Lautsprecher (181, 182) zur Ausgabe der wenigstens zwei Lautsprechersignale (181, 182) und eine Gehäusestruktur (183) umfasst, die die wenigstens zwei Lautsprecher (181, 182) aufnimmt, wobei die mindestens eine Gehäusestruktur (183) geeignet ist, an einem Kopf eines Nutzers oder einem anderen Körperteil des Nutzers befestigt zu werden.

11. System nach einem der Ansprüche 1 bis 8,
wobei das System einen Kopfhörer (180) umfasst, der wenigstens zwei Lautsprecher (181, 182) zur Ausgabe der wenigstens zwei Lautsprechersignale umfasst.

12. System nach Anspruch 11,
wobei der Detektor (110) und der Positionsbestimmer (120) und der Audiotyp-Klassifikator (130) und der Signalanteil-Modifizierer (140) und der Signalgenerator (150) in den Kopfhörer (180) integriert sind.

13. System nach Anspruch 11,
wobei das System ein entferntes Gerät (190) umfasst, das den Detektor (110) und den Positionsbestimmer (120) und den Audiotyp-Klassifikator (130) und den Signalanteil-Modifizierer (140) und den Signalgenerator (150) umfasst,
wobei das entfernte Gerät von dem Kopfhörer räumlich getrennt sind.

14. System nach Anspruch 13, wobei das entfernte Gerät (190) ein Smartphone ist.

15. System nach einem der vorherigen Ansprüche,
wobei das System des Weiteren eine Vorrichtung umfasst, die ausgebildet ist, Mikrofon-Daten zu erhalten, die ein oder mehrere Mikrofonsignale umfassen,
wobei das System ausgebildet ist, zusätzlich zu den Mikrofon-Daten Nachverfolgungsdaten betreffend eine Position und eine Orientierung eines Nutzers zu erhalten,
wobei die Vorrichtung ausgebildet ist, die ein oder mehreren Raumakustik-Parameter abhängig von den Mikrofon-Daten und abhängig von den Nachverfolgungsdaten zu bestimmen.

16. System nach Anspruch 15,
wobei der Signalanteil-Modifizierer (140) ausgebildet ist, die Veränderung des Audioquellen-Signalanteils der wenigstens einen Audioquelle der ein oder mehreren Audioquellen abhängig von wenigstens einem oder mehreren Raumakustik-Parametern durchzuführen, und/oder
wobei der Signalgenerator (150) ausgebildet ist, die Erzeugung von wenigstens einer der Mehrzahl von binauralen Raumimpulsantworten für jede Audioquelle der ein oder mehreren Audioquellen abhängig von dem wenigstens einen, der ein oder mehreren Raumakustik-Parameter durchzuführen.

17. System nach Anspruch 15 oder 16,
wobei die Vorrichtung ausgebildet ist, maschinelles Lernen einzusetzen, um abhängig von den Mikrofon-Daten und abhängig von den Nachverfolgungsdaten die ein oder mehreren Raumakustik-Parameter zu bestimmen.

18. System nach einem der Ansprüche 15 bis 17,
wobei die ein oder mehreren Raumakustik-Parameter eine Nachhallzeit umfassen.

19. System nach einem der Ansprüche 15 bis 18,
wobei die ein oder mehreren Raumakustik-Parameter ein Direkt-zu-Nachhall Verhältnis umfassen.

20. System nach einem der Ansprüche 15 bis 19,
wobei die Vorrichtung ausgebildet ist, die ein oder mehreren Mikrofonsignale aus einer Zeitdomäne in eine Frequenzdomäne zu transformieren,
wobei die Vorrichtung ausgebildet ist, ein oder mehrere Merkmale der ein oder mehreren Mikrofonsignale in der Frequenzdomäne zu extrahieren, und
wobei die Vorrichtung ausgebildet ist, die ein oder mehreren Raumakustik-Parameter abhängig von den ein oder mehreren Merkmalen zu bestimmen.

21. System nach einem der Ansprüche 15 bis 20,
wobei die Vorrichtung eine Mikrofonanordnung von mehreren Mikrofonen umfasst, um mehrere Mikrofonsignale als die ein oder mehreren Mikrofonsignale aufzunehmen.

22. System nach Anspruch 21,
wobei die Mikrofonanordnung ausgebildet ist, von einem Nutzer am Körper getragen zu werden.

23. Verfahren zur Unterstützung von selektivem Hören, wobei das Verfahren umfasst:
Detektion eines Audioquellen-Signalanteils von ein oder mehreren Audioquellen unter Verwendung von wenigstens zwei empfangenen Mikrofonsignalen einer Hörumgebung,
Zuweisung von Positionsinformation zu jeder der ein oder mehreren Audioquellen, Zuordnung eines Audiosignaltyps zu dem Audioquellen-Signalanteil jeder der ein oder mehreren Audioquellen,
Veränderung des Audioquellen-Signalanteils von wenigstens einer Audioquelle der ein oder mehreren Audioquellen abhängig von dem Audiosignaltyp des Audioquellen-Signalanteils der wenigstens einen Audioquelle, um einen modifizierten Audiosignalanteil der wenigstens einen Audioquelle zu erhalten, und
Erzeugung von einer Mehrzahl von binauralen Raumimpulsantworten für jede Audioquelle der ein oder mehreren Audioquellen abhängig von der Positionsinformation dieser Audioquelle und einer Orientierung eines Kopfes eines Nutzers, und Erzeugung von wenigstens zwei Lautsprechersignalen abhängig von der Mehrzahl der binauralen Raumimpulsantworten und abhängig von dem modifizierten Audiosignalanteil der wenigstens einen Audioquelle,
wobei die wenigstens eine Audioquelle, deren Audioquellen-Signalanteil modifiziert wird, abhängig von einem zuvor erlernten Benutzerszenario ausgewählt wird und abhängig von dem zuvor erlernten Benutzerszenario modifiziert wird, wobei zur Hörunterstützung erwünschter Schall lauter und unerwünschter Schall leiser wiedergegeben wird, um die Sprachverständlichkeit zu erhöhen.

24. Computerprogramm mit einem Programmcode zur Durchführung des Verfahrens nach Anspruch 23.

## Claims

1. System for assisting selective hearing, the system including:
a detector (110) for detecting an audio source signal portion of one or more audio sources by using at least two received microphone signals of a hearing environment,
a position determiner (120) for assigning position information to each of the one or more audio sources,
an audio type classifier (130) for allocating an audio signal type to the audio source signal portion of each of the one or more audio sources,
a signal portion modifier (140) for varying the audio source signal portion of at least one audio source of the one or more audio sources depending on the audio signal type of the audio source signal portion of the at least one audio source so as to obtain a modified audio signal portion of the at least one audio source, and
a signal generator (150) for generating a plurality of binaural room impulse responses for each audio source of the one or more audio sources depending on the position information of this audio source and an orientation of a user's head, and for generating at least two loudspeaker signals depending on the plurality of the binaural room impulse responses and depending on the modified audio signal portion of the at least one audio source,
wherein the signal portion modifier (140) is configured to select the at least one audio source whose audio source signal portion is modified, depending on a previously learned user scenario and to modify the same depending on the previously learned user scenario, wherein, for assisted hearing, desired sound is reproduced louder and undesired sound is reproduced more quiet to increase speech comprehensibility.

2. System according to claim 1,
wherein the detector (110) is configured to detect the audio source signal portion of the one or more audio sources by using deep learning models.

3. System according to claim 1 or 2,
wherein the position determiner (120) is configured to determine, for each of the one or more audio sources, the position information depending on a captured image or a recorded video.

4. System according to claim 3,
wherein the position determiner (120) is configured to determine, for each of the one or more audio sources, the position information depending on the video by detecting a lip movement of a person in the video and by allocating, depending on the lip movement, the same to the audio source signal portion of one of the one or more audio sources.

5. System according to any of the preceding claims,
wherein the detector (110) is configured to determine one or more acoustical properties of the hearing environment depending on the at least two received microphone signals.

6. System according to claim 5,
wherein the signal generator (150) is configured to determine the plurality of binaural room impulse responses depending on the one or more acoustical properties of the hearing environment.

7. System according to any of the preceding claims,
wherein the system includes a user interface (160) for selecting the previously learned user scenario from a group of two or more previously learned user scenarios.

8. System according to any of the preceding claims,
wherein the detector (110) and/or the position determiner (120) and/or the audio type classifier (130) and/or the signal portion modifier (140) and/or the signal generator (150) is configured to perform parallel signal processing using a Hough transformation or employing a plurality of VLSI chips or by employing a plurality of memristors.

9. System according to any of the preceding claims,
wherein a system includes a hearing device (170) that serves as a hearing aid for users that are limited in their hearing capability and/or have damaged hearing, wherein the hearing device (170) includes at least two loudspeakers (171, 172) for outputting the at least two loudspeaker signals.

10. System according to any of claims 1 to 8,
wherein the system includes at least two loudspeakers (181,182) for outputting the at least two loudspeaker signals (181,182), and a housing structure (183) that houses the at least two loudspeakers (181,182), wherein the at least one housing structure (183) is suitable for being fixed to a user's head or to any other body part of the user.

11. System according to any of claims 1 to 8,
wherein the system includes a headphone (180) that includes at least two loudspeakers (181, 182) for outputting the at least two loudspeaker signals.

12. System according to claim 11,
wherein the detector (110) and the position determiner (120) and the audio classifier (130) and the signal portion modifier (140) and the signal generator (150) are integrated into the headphone (180).

13. System according to claim 11,
wherein the system includes a remote device (190) that includes the detector (110) and the position determiner (120) and the audio type classifier (130) and the signal portion modifier (140) and the signal generator (150),
wherein the remote device is spatially separated from the headphone.

14. System according to claim 13, wherein the remote device (190) is a smartphone.

15. System according to any of the preceding claims,
wherein the system further includes an apparatus configured to obtain microphone data including one or more microphone signals,
wherein the system is configured to obtain, in addition to the microphone data, tracking data concerning a position and orientation of a user,
wherein the system is configured to determine the one or more room acoustics parameters depending on the microphone data and depending on the tracking data.

16. System according to claim 15,
wherein the signal portion modifier (140) is configured to perform the variation of the audio source signal portion of the at least one audio source of the one or more audio sources depending on at least one or more room acoustics parameters; and/or
wherein the signal generator (150) is configured to perform the generation of at least one of the plurality of binaural room impulse responses for each audio source of the one or more audio source depending on the at least one of the one or more room acoustics parameters.

17. System according to claim 15 or 16,
wherein the apparatus is configured to employ machine learning to determine the one or more room acoustics parameters depending on the microphone data and depending on the tracking data.

18. System according to any one of claims 15 to 17,
wherein the one or more room acoustics parameters include a reverberation time.

19. System according to any one of claims 15 to 18,
wherein the one or more room acoustics parameters include a direct-to-reverberant ratio.

20. System according to any of claims 15 to 19,
wherein the apparatus is configured to transform the one or more microphone signals from a time domain into a frequency domain,
wherein the apparatus is configured to extract one or more features of the one or more microphone signals in the frequency domain, and
wherein the apparatus is configured to determine the one or more room acoustics parameters depending on the one or more features.

21. System according to any of claims 15 to 20,
wherein the apparatus includes a microphone arrangement of several microphones to record several microphone signals as the one or more microphone signals.

22. System according to claim 21,
wherein the microphone arrangement is configured to be worn at a user's body.

23. Method for assisting selective hearing, the method including:
detecting an audio source signal portion of one or more audio sources by using at least two received microphone signals of a hearing environment,
assigning position information to each of the one or more audio sources,
allocating an audio signal type to the audio source signal portion of each of the one or more audio sources,
varying the audio source signal portion of at least one audio source of the one or more audio sources depending on the audio signal type of the audio source signal portion of the at least one audio source so as to obtain a modified audio signal portion of the at least one audio source, and
generating a plurality of binaural room impulse responses for each audio source of the one or more audio sources depending on the position information of this audio source and an orientation of a user's head, and for generating at least two loudspeaker signals depending on the plurality of the binaural room impulse responses and depending on the modified audio signal portion of the at least one audio source,
wherein the at least one audio source whose audio source signal portion is modified, is selected depending on a previously learned user scenario and is modified depending on the previously learned user scenario, wherein, for assisted hearing, desired sound is reproduced louder and undesired sound is reproduced more quiet to increase speech comprehensibility.

24. Computer program with a program code for performing the method according to claim 23.

## Revendications

1. Système d'aide à l'écoute sélective, le système comprenant :
un détecteur (110) destiné à détecter une composante de signal de source audio d'une ou de plusieurs sources audio à l'aide d'au moins deux signaux de microphone reçus d'un environnement sonore,
un dispositif de détermination de position (120) destiné à attribuer une information de position à chacune des une ou plusieurs sources audio,
un classificateur de type audio (130) destiné à associer un type de signal audio à la composante de signal de source audio de chacune des une ou plusieurs sources audio,
un modificateur de composante de signal (140) destiné à modifier la composante de signal de source audio d'au moins une source audio parmi les une ou plusieurs sources audio, en fonction du type de signal audio de la composante de signal de source audio de ladite au moins une source audio, afin d'obtenir une composante de signal audio modifiée de ladite au moins une source audio, et
un générateur de signaux (150) destiné à générer une pluralité de réponses impulsionnelles spatiales binaurales pour chaque source audio des une ou plusieurs sources audio, en fonction de l'information de position de cette source audio et d'une orientation de la tête d'un utilisateur, et à générer au moins deux signaux de haut-parleur en fonction de la pluralité de réponses impulsionnelles spatiales binaurales et en fonction de la composante de signal audio modifiée de ladite au moins une source audio,
le modificateur de composante de signal (140) étant conçu pour sélectionner l'au moins une source audio, dont la composante de signal de source audio est modifiée, en fonction d'un scénario utilisateur préalablement appris, et pour la modifier en fonction du scénario utilisateur préalablement appris, le son souhaité étant, pour l'aide à l'écoute, reproduit plus fort et le son indésirable reproduit plus faiblement, afin d'augmenter l'intelligibilité de la parole.

2. Système selon la revendication 1,
le détecteur (110) étant conçu pour détecter la composante de signal de source audio des une ou plusieurs sources audio à l'aide de modèles d'apprentissage profond.

3. Système selon la revendication 1 ou 2,
le dispositif de détermination de position (120) étant conçu pour déterminer, pour chacune des une ou plusieurs sources audio, l'information de position en fonction d'une image capturée ou d'une vidéo capturée.

4. Système selon la revendication 3,
le dispositif de détermination de position (120) étant conçu pour déterminer, pour chacune des une ou plusieurs sources audio, l'information de position en fonction de la vidéo, en détectant un mouvement des lèvres d'une personne dans la vidéo et en associant, en fonction du mouvement des lèvres, la composante de signal de source audio à l'une des une ou plusieurs sources audio.

5. Système selon l'une des revendications précédentes,
le détecteur (110) étant conçu pour déterminer une ou plusieurs caractéristiques acoustiques de l'environnement sonore en fonction des au moins deux signaux de microphone reçus.

6. Système selon la revendication 5,
le générateur de signaux (150) étant conçu pour déterminer la pluralité de réponses impulsionnelles spatiales binaurales en fonction des une ou plusieurs caractéristiques acoustiques de l'environnement sonore.

7. Système selon l'une des revendications précédentes,
le système incluant une interface utilisateur (160) destinée à sélectionner le scénario utilisateur préalablement appris parmi un groupe de deux ou plusieurs scénarios utilisateur préalablement appris.

8. Système selon l'une des revendications précédentes,
le détecteur (110) et/ou le dispositif de détermination de position (120) et/ou le classificateur de type audio (130) et/ou le modificateur de composante de signal (140) et/ou le générateur de signaux (150) étant conçu(s) pour effectuer un traitement parallèle des signaux à l'aide d'une transformation de Hough ou en utilisant une pluralité de puces VLSI ou en utilisant une pluralité de memristors.

9. Système selon l'une des revendications précédentes,
le système incluant un appareil auditif (170) qui sert d'aide auditive à des utilisateurs présentant une capacité auditive réduite et/ou malentendants, l'appareil auditif (170) incluant au moins deux haut-parleurs (171, 172) destinés à émettre lesdits au moins deux signaux de haut-parleur.

10. Système selon l'une des revendications 1 à 8,
le système incluant au moins deux haut-parleurs (181, 182) destinés à émettre lesdits au moins deux signaux de haut-parleur (181, 182) et une structure de boîtier (183) qui reçoit les au moins deux haut-parleurs (181, 182), ladite au moins une structure de boîtier (183) étant adaptée pour être fixée à une tête d'un utilisateur ou à une autre partie du corps de l'utilisateur.

11. Système selon l'une des revendications 1 à 8,
le système incluant un casque audio (180) qui inclut au moins deux haut-parleurs (181, 182) destinés à émettre lesdits au moins deux signaux de haut-parleur.

12. Système selon la revendication 11,
le détecteur (110) et le dispositif de détermination de position (120) et le classificateur de type audio (130) et le modificateur de composante de signal (140) et le générateur de signaux (150) étant intégrés dans le casque audio (180).

13. Système selon la revendication 11,
le système incluant un dispositif distant (190) qui inclut le détecteur (110) et le dispositif de détermination de position (120) et le classificateur de type audio (130) et le modificateur de composante de signal (140) et le générateur de signaux (150),
le dispositif distant étant séparé spatialement du casque audio.

14. Système selon la revendication 13, dans lequel le dispositif distant (190) est un smartphone.

15. Système selon l'une des revendications précédentes,
le système incluant en outre un dispositif conçu pour obtenir des données de microphone qui incluent un ou plusieurs signaux de microphone,
le système étant conçu pour obtenir, en plus des données de microphone, des données de suivi concernant une position et une orientation d'un utilisateur,
le dispositif étant conçu pour déterminer les un ou plusieurs paramètres d'acoustique de salle en fonction des données de microphone et en fonction des données de suivi.

16. Système selon la revendication 15,
le modificateur de composante de signal (140) étant conçu pour effectuer la modification de la composante de signal de source audio de l'au moins une source audio des une ou plusieurs sources audio en fonction d'au moins un ou plusieurs paramètres d'acoustique de salle, et/ou
le générateur de signaux (150) étant conçu pour effectuer la génération d'au moins une de la pluralité de réponses impulsionnelles spatiales binaurales pour chaque source audio des une ou plusieurs sources audio en fonction de l'au moins un des un ou plusieurs paramètres d'acoustique de salle.

17. Système selon la revendication 15 ou 16,
le dispositif étant conçu pour utiliser l'apprentissage automatique afin de déterminer les un ou plusieurs paramètres d'acoustique de salle en fonction des données de microphone et en fonction des données de suivi.

18. Système selon l'une des revendications 15 à 17,
les un ou plusieurs paramètres d'acoustique de salle incluant une durée de réverbération.

19. Système selon l'une des revendications 15 à 18,
les un ou plusieurs paramètres d'acoustique de salle incluant un rapport direct/réverbéré.

20. Système selon l'une des revendications 15 à 19,
le dispositif étant conçu pour transformer les un ou plusieurs signaux de microphone d'un domaine temporel en un domaine fréquentiel,
le dispositif étant conçu pour extraire une ou plusieurs caractéristiques des un ou plusieurs signaux de microphone dans le domaine fréquentiel, et
le dispositif étant conçu pour déterminer les un ou plusieurs paramètres d'acoustique de salle en fonction des une ou plusieurs caractéristiques.

21. Système selon l'une des revendications 15 à 20,
le dispositif incluant un réseau de microphones constitué de plusieurs microphones, afin de capter plusieurs signaux de microphone en tant que les un ou plusieurs signaux de microphone.

22. Système selon la revendication 21,
le réseau de microphones étant conçu pour être porté sur le corps par un utilisateur.

23. Procédé d'aide à l'écoute sélective, le procédé comprenant le fait de :
détecter une composante de signal de source audio d'une ou plusieurs sources audio à l'aide d'au moins deux signaux de microphone reçus d'un environnement d'écoute,
attribuer une information de position à chacune des une ou plusieurs sources audio,
associer un type de signal audio à la composante de signal de source audio de chacune des une ou plusieurs sources audio,
modifier la composante de signal de source audio d'au moins une source audio des une ou plusieurs sources audio en fonction du type de signal audio de la composante de signal de source audio de ladite au moins une source audio, afin d'obtenir une composante de signal audio modifiée de ladite au moins une source audio, et
générer une pluralité de réponses impulsionnelles spatiales binaurales pour chaque source audio des une ou plusieurs sources audio en fonction de l'information de position de cette source audio et d'une orientation de la tête d'un utilisateur, et générer au moins deux signaux de haut-parleur en fonction de la pluralité de réponses impulsionnelles spatiales binaurales et en fonction de la composante de signal audio modifiée de ladite au moins une source audio,
ladite au moins une source audio, dont la composante de signal de source audio est modifiée, étant sélectionnée en fonction d'un scénario utilisateur préalablement appris et modifiée en fonction du scénario utilisateur préalablement appris, le son souhaité étant, pour l'aide à l'écoute, reproduit plus fort et le son indésirable reproduit plus faiblement, afin d'augmenter l'intelligibilité de la parole.

24. Programme informatique comprenant un code de programme destiné à mettre en œuvre le procédé selon la revendication 23.
